# EUROPÄISCHE PATENTSCHRIFT

(11) **EP 4 507 875 B1**
(45) Veröffentlichungstag und Bekanntmachung des Hinweises auf die Patenterteilung: **28.01.2026**
(21) Anmeldenummer: 23720755.0
(22) Anmeldetag: 04.04.2023
(51) Int. Cl.: B29C 64/386, B22F 10/80, B33Y 50/00, G06F 119/18, G06F 113/10, G06F 30/10, G06F 30/20

(54) **VERFAHREN ZUR HERSTELLUNG EINER 3D-STRUKTUR IN EINEM 3D-DRUCKVERFAHREN**
METHOD FOR PRODUCING A 3D STRUCTURE IN A 3D PRINTING METHOD
PROCÉDÉ DE PRODUCTION DE STRUCTURE 3D DANS UN PROCÉDÉ D'IMPRESSION 3D

(30) Priorität: 11.04.2022 DE 102022001231
(43) Veröffentlichungstag der Anmeldung: 19.02.2025
(73) Patentinhaber: Laempe Mössner Sinto GmbH, 39179 Barleben OT Meltzendorf (DE)
(72) Erfinder: WEDEMEYER, Frank, 79669 Zell im Wiesental (DE); WINTGENS, Rudolf, 79650 Schopfheim (DE); HEINRICH, Florian, 94342 Straßkirchen (DE)
(74) Vertreter: Fischer, Volker
(86) Internationale Anmeldenummer: PCT/DE2023/000023
(87) Internationale Veröffentlichungsnummer: WO 2023/198235

(56) Entgegenhaltungen:
- DE-A1- 102012 022 435
- DE-A1- 102017 108 031
- US-A1- 2010 125 356

## Beschreibung

Die Erfindung betrifft ein Verfahren zur Herstellung einer 3D-Struktur in einem 3D-Druckverfahren, bei welchem für eine zu erzeugende 3D-Struktur aus 3D-Druck-daten, welche Daten einer Soll-Geometrie der 3D-Struktur sind, erste Schichtdaten für die einzelnen Schichten der zu erzeugenden 3D-Struktur bereitgestellt werden, mit welchen die Erzeugung der 3D-Struktur in einem 3D-Druckverfahren gesteuert wird.

Bekannt ist es, zur Herstellung einzelner oder serienmäßiger Bauteile, Werkstücke oder Formen einen sogenannten 3D-Druck beziehungsweise ein sogenanntes 3D-Druckverfahren einzusetzen. Bei derartigen Druckverfahren werden dreidimensionale Bauteile oder Werkstücke schichtweise aufgebaut hergestellt.

Der Aufbau erfolgt rechnergesteuert aus einem oder mehreren flüssigen oder festen Werkstoffen nach vorgegebenen Maßen und Formen. Vorgaben für die zu druckenden Bauteile oder Werkstücke (3D-Strukturen) können beispielsweise von sogenannten rechnerunterstützten Konstruktionssystemen (CAD engl. computeraided design) in Form von 3D-Druckdaten bereitgestellt werden.

Beim Druck der 3D-Strukturen beziehungsweise 3D-Bauteile finden physikalische oder chemische Härtungsprozesse oder ein Schmelzprozess in einem partikelförmigen Baumaterial, welches auch als Formstoff bezeichnet wird, statt. Als Werkstoffe für derartige 3D-Druckverfahren werden beispielsweise bei sogenannten Pulverbettverfahren oder Schichtverfahren Baumaterialien beziehungsweise Formstoffe wie Kunststoffe, Kunstharze, Keramiken, unverfestigte Sedimente wie Mineralien oder Sande und Metalle eingesetzt. Darüber hinaus sind auch Kunststoffe oder Metalle verwendende extrudierende oder konturbasierende Verfahren bekannt.

Bei der Umsetzung von 3D-Druckverfahren sind verschiedene Fertigungsverfahrensabläufe bekannt.

Mehrere dieser Verfahrensabläufe umfassen jedoch die nachfolgend beispielhaft dargestellten Verfahrensschritte:
- Teil- oder vollflächiges Auftragen von partikelförmigem Baumaterial, auch als Partikelmaterial oder pulverförmiges Aufbaumaterial bezeichnet, auf ein sogenanntes Baufeld, um eine Schicht aus nichtverfestigtem Partikelmaterial zu bilden, wobei das teil- oder vollflächige Auftragen von partikelförmigem Baumaterial das Austragen und das Glätten des partikelförmigen Baumaterials umfasst;
- Selektives Verfestigen der aufgebrachten Schicht aus nichtverfestigtem partikelförmigem Baumaterial in vorbestimmten Teilbereichen, beispielsweise durch ein selektives Verdichten, Aufdrucken oder Aufbringen von Behandlungsmitteln, wie beispielsweise einem Bindemittel, mittels eines Druckkopfes oder dem Einsatz eines Lasers;
- Wiederholung der vorhergehenden Verfahrensschritte in einer weiteren Schichtebene zum schichtweisen Aufbau des Bauteils oder Werkstücks. Hierfür ist es vorgesehen, das Bauteil oder Werkstück, welches auf dem Baufeld schichtweise aufgebaut bzw. aufgedruckt wird, mit dem Baufeld jeweils um eine Schichtebene oder Schichtdicke abzusenken oder die 3D-Druckvorrichtung jeweils um eine Schichtebene oder Schichtdicke gegenüber dem Baufeld anzuheben, bevor eine neue Schicht teil- oder vollflächig aufgetragen wird;
- Nachfolgendes Entfernen von losem, nichtverfestigtem partikelförmigem Baumaterial, welches das gefertigte Bauteil oder Werkstück umgibt.

Als partikelförmiges Baumaterial wird allgemein eine Ansammlung einzelner Teilchen eines Stoffs oder eines Stoffgemischs verstanden, wobei jedes Teilchen eine dreidimensionale Erstreckung aufweist. Da diese Teilchen überwiegend als runde, ovale oder auch längliche Teilchen aufgefasst werden können, ist es möglich, einen durchschnittlichen Durchmesser für ein derartiges Teilchen anzugeben, welcher meist im Bereich zwischen 0,01 mm bis 0,4 mm liegt. Ein derartiges partikelförmiges Baumaterial kann fluide Eigenschaften aufweisen.

Aus dem Stand der Technik sind verschiedene Verfahren zum Erzeugen einer 3D-Struktur bzw. zum Austragen und Auftragen von partikelförmigem Baumaterial auf ein Baufeld zur Erzeugung einer 3D-Struktur bekannt.

Aus der DE 10 117 875 C1 sind ein Verfahren sowie eine Vorrichtung zum Auftragen von Fluiden sowie deren Verwendung bekannt.

Das Verfahren zum Auftragen von Fluiden gemäß der DE 10 117 875 C1 bezieht sich insbesondere auf Partikelmaterial, welches auf einen zu beschichtenden Bereich aufgetragen wird, wobei vor einer Klinge, in Vorwärtsbewegungsrichtung der Klinge gesehen, das Fluid auf den zu beschichtenden Bereich aufgetragen wird und danach die Klinge über dem aufgetragenen Fluid verfahren wird.

Die Aufgabe der DE 10 117 875 C1 besteht darin, eine Vorrichtung, ein Verfahren sowie eine Verwendung der Vorrichtung bereitzustellen, mit denen eine möglichst ebene Verteilung von fluidem Material auf einem zu beschichtenden Bereich erreicht werden kann.

Zur Lösung ist es in der DE 10 117 875 C1 vorgesehen, dass die Klinge eine Schwingung nach Art einer Drehbewegung ausführt. Durch die schwingende Drehbewegung der Klinge wird das auf den zu beschichtenden Bereich aufgebrachte Fluid fluidisiert. Hierdurch kann nicht nur stark zur Agglomerierung neigendes Partikelmaterial möglichst eben und glatt aufgetragen werden, sondern es ist darüber hinaus möglich, auch die Verdichtung des Fluids durch die Schwingung zu beeinflussen.

In einer bevorzugten Ausführungsform der DE 10 117 875 C1 ist es vorgesehen, dass das Auftragen des Fluids auf den zu beschichtenden Bereich im Überschuss erfolgt. So wird durch die ständige Bewegung der Klinge, die nach Art einer Drehbewegung oszilliert, das überschüssige Fluid, in Vorwärtsbewegungsrichtung der Klinge gesehen, vor der Klinge in einer aus Fluid bzw. Partikelmaterial durch die Vorwärtsbewegung der Klinge gebildeten Walze homogenisiert. Dadurch können etwaige Hohlräume zwischen einzelnen Partikelagglomerationen gefüllt werden und größere Agglomerationen des Partikelmaterials werden durch die Walzenbewegung aufgebrochen.

Aus dem Bereich der Fertigung ist der Begriff der Maßhaltigkeit bekannt, was bedeutet, dass die Istmaße eines Werkstücks innerhalb der vereinbarten zulässigen Abweichung vom festgelegten Nennmaß liegen sollen.

Nach dem Stand der Technik werden bei der Erzeugung von 3D-Strukturen Maßnahmen durchgeführt, um diese Maßhaltigkeit zu erreichen beziehungsweise um Abweichungen zwischen einer zu fertigenden 3D-Struktur und einer im 3D-Druck erzeugten 3D-Struktur zu verringern.

Die DE 10 2012 022 435 A1 offenbart ein Verfahren zum Erzeugen eines dreidimensionalen Objektes mittels eines generativen Herstellungsverfahrens. Offenbart sind nachfolgende Verfahrensschritte: a) Herstellen des Objektes auf Grundlage eines die Raumform des Objektes vorgebenden, binären Datensatzes, im Weiteren als Soll-Datensatz bezeichnet, mit Hilfe des generativen Herstellungsverfahrens, b) Erfassen der tatsächlichen Raumform von wenigstens einem Teilbereich des hergestellten Objektes und Erzeugen eines die tatsächliche Raumform des wenigstens einen Teilbereiches des Objektes beschreibenden binären Datensatzes, im Weiteren als Ist-Datensatz, bezeichnet, c) Ermitteln von geometrischen Abweichungen zwischen der Raumform des wenigstens einen Teilbereiches des Objektes, das durch den Soll-Datensatz vorgegeben ist, und der Raumform des wenigstens einen Teilbereiches des Objektes, an dem der Ist-Datensatz erzeugt ist, d) Verändern des Soll-Datensatzes unter Zugrundelegung wenigstens einer Korrekturfunktion, die zumindest von den geometrischen Abweichungen abgeleitet ist, zum Erhalt eines binären Korrektur-Datensatzes und e) Erzeugen des Objektes auf Grundlage des binären Korrektur-Datensatzes mit Hilfe des generativen Herstellungsverfahrens.

Aus der DE 10 2017 108 031 A1 sind ein Verfahren und eine Fertigungsvorrichtung zum lagenweisen Aufbau eines durch Geometriebeschreibungsdaten definierten Formkörpers bekannt, wobei der lagenweise Aufbau durch Aufschmelzen und Abscheiden eines vorzugsweise drahtförmigen Werkstoffes erfolgt. Der Werkstoff wird hierbei in einzelnen Werkstoffbahnen abgelegt, wobei Prozessparameter herangezogen werden, die anhand von in einer Datenbank gespeicherten Zusammenhängen zwischen Prozessparametern, Werkstoffeigenschaften und ausgebildeter Geometrie einer Werkstoffbahn beziehungsweise deren Abweichung von der Soll-Geometrie des Formkörpers bestimmt werden. Jede Werkstoffbahn wird nach dem Abscheiden mittels eines Messsystems gemessen und ihre Abweichung von der Soll-Form mit den verwendeten Prozessparametern in der Datenbank eingetragen.

Die US 2010 / 125356 A1 offenbart ein System und ein Verfahren zur Herstellung eines dreidimensionalen Objekts. Das Verfahren umfasst das Empfangen eines vorgegebenen Objektmusters, das einen Teil eines dreidimensionalen Objekts darstellt, das Modifizieren des vorgegebenen Objektmusters, um die geometrische Verzerrung eines Mustergenerators zu korrigieren, und das Generieren des modifizierten Musters unter Verwendung des Mustergenerators. Das generierte Muster interagiert mit einem reaktiven Material, um den Teil des dreidimensionalen Objekts zu bilden, der durch das vorgegebene Objektmuster definiert ist.

Aus der US 10 769 324 B2 ist ein Verfahren zum Scannen eines zweiten Teils einer gedruckten 3D-Struktur und zur Modifikation von 3D-Druck-Daten für ein erstes Teil einer 3D-Struktur bekannt, in welchem basierend auf dem Scan des zweiten Teils modifizierte, vorverzerrte 3D-Spezifikationen für das erste Teil unter Berücksichtigung der Druckcharakteristik erstellt werden.

Ein Nachteil des bekannten Standes der Technik besteht darin, dass üblicherweise eine unzureichende Qualitätskontrolle der erzeugten 3D-Strukturen auf Abweichungen von vorgegebenen Abmessungen erfolgt.

Für den Fall, dass eine Qualitätskontrolle der erzeugten 3D-Strukturen beispielsweise durch ein Vermessen der erzeugten 3D-Strukturen erfolgt, können die erkannten Abweichungen von vorgegebenen Abmessungen der 3D-Strukturen beispielsweise durch ein mechanisches Nachjustieren von Bauteilen beziehungsweise von Baugruppen des 3D-Druckers korrigiert werden.

Derartige mechanische Nachjustierungen sind aber meist aufwendig, da beispielsweise teilweise eine Zerlegung des 3D-Druckers notwendig ist, um die zu justierenden Bauteile beziehungsweise Baugruppen zu erreichen. Außerdem bedingen derartige Nachjustierungen auch den Stillstand des 3D-Druckers, also eine Unterbrechung der Erzeugung einer 3D-Struktur im 3D-Drucker.

Dies ist insbesondere in Bereichen, in welchen sehr enge Toleranzen bei der Herstellung von 3D-Strukturen vorgegeben sind, sehr nachteilig. Derartige Toleranzbereiche liegen beispielsweise bei vorgegebenen maximalen Abweichungen zwischen +0,3 mm und -0,3 mm. Folglich darf eine gefertigte 3D-Struktur in einer ersten Dimension, wie beispielsweise ihrer Länge ein Übermaß von bis zu 0,3 mm oder ein Untermaß von bis zu 0,3 mm aufweisen, um die vorgegebene enge Toleranz einzuhalten.

**Somit besteht** nach dem Stand der Technik nur unzureichende und/oder aufwändige Möglichkeit einer geeigneten Qualitätskontrolle beziehungsweise Qualitätssicherung bei der Erzeugung von 3D-Strukturen.

Somit besteht ein Bedarf nach einer Verbesserung des bekannten Stands der Technik und somit an einem verbesserten Verfahren zur Herstellung einer 3D-Struktur in einem 3D-Druckverfahren.

Die Aufgabe der Erfindung besteht darin, ein Verfahren zur Herstellung einer 3D-Struktur in einem 3D-Druckverfahren anzugeben, womit eine automatisierte Korrektur der für das 3D-Druckverfahren verwendeten 3D-Druckdaten für die zu erzeugenden 3D-Struktur beim Auftreten von Abweichungen bei der Fertigung der 3D-Strukturen erfolgt.

Insbesondere sollen derart die bei der Herstellung der 3D-Struktur in dem 3D-Druckverfahren auftretenden Abweichungen verringert werden.

Diese automatisierte Korrektur der für das 3D-Druckverfahren verwendeten 3D-Druckdaten soll insbesondere auch in Bereichen auf der Oberfläche der 3D-Struktur erfolgen, welche einem dreidimensionalen Scan der Oberfläche nicht zugänglich sind.

Die Aufgabe wird durch ein Verfahren zur Herstellung einer 3D-Struktur in einem 3D-Druckverfahren mit den Merkmalen gemäß Patentanspruch 1 der selbstständigen Patentansprüche gelöst. Weiterbildungen sind in den abhängigen Patentansprüchen angegeben.

Zu derartigen 3D-Druckverfahren gehören alle Verfahren, bei denen die Bauteilgeometrie durch schichtweises Auftragen eines flüssigen oder pastösen Mediums auf ein Substrat und nachfolgende Verfestigung erzeugt wird. Beispielhaft und ohne Anspruch auf Vollständigkeit seien hier die Stereolithographie, das Laser- und Elektronenstrahlschmelzen, das Binder und Material Jetting, das Auftragsschweißen, das Digital Light Processing sowie das Fused Filament Fabrication genannt. Vorgesehen ist es, mittels des Verfahrens zur Herstellung einer 3D-Struktur in einem 3D-Druckverfahren eine 3D-Struktur nach dem bekannten Stand der Technik beispielsweise mittels eines pulverbettbasierten Binder Jetting Verfahrens zu erzeugen.

Auch wenn das vorliegende Verfahren zur Herstellung einer 3D-Struktur in einem 3D-Druckverfahren nachfolgend nur noch am Beispiel des Binder Jetting Verfahrens beschrieben wird, stellt dies keine Einschränkung des Verfahrens auf dieses 3D-Druckverfahren dar.

Bekannt ist es, dass bei einem derartigen 3D-Druckverfahren 3D-Druckdaten der Soll-Geometrie der 3D-Struktur in spezifische Anweisungen für die Erzeugung einzelner Schichten im 3D-Druckverfahren umgewandelt werden, welche auch als Schichtdaten bezeichnet werden und mit welchen die Erzeugung der 3D-Struktur bei einem 3D-Druckverfahren gesteuert wird.

Nach der Erzeugung der gewünschten 3D-Struktur auf einem Baufeld des 3D-Druckers in einem additiven Fertigungsverfahren wie dem Binder Jetting Verfahren härtet diese aus, das nicht verfestigte partikelförmige Baumaterial wird entfernt und die 3D-Struktur ist somit freigelegt.

Durch den 3D-Druck selbst, die anschließende Aushärtung oder eine notwendige Nachbearbeitung, bei welcher Reste des partikelförmigen Baumaterials mechanisch und/oder mittels eines Luftstroms von der erzeugten 3D-Struktur entfernt werden, ist es möglich, dass die durch die 3D-Druckdaten vorgegebene, gewünschte Soll-Geometrie der 3D-Struktur nicht mit einer erzeugten Ist-Geometrie der 3D-Struktur übereinstimmt. Sofern derartige Abweichungen der Ist-Geometrie von der Soll-Geometrie zuvor festgelegte Toleranzen nicht überschreiten, ist die 3D-Struktur maßhaltig, bei Überschreitung der Toleranzen ist die 3D-Struktur nicht maßhaltig.

Derartige Abweichungen werden auch als Verzüge oder Schrumpfungen bezeichnet. Derartige Verzüge können auch durch ein Handling beziehungsweise den Transport der erzeugten 3D-Strukturen hervorgerufen werden.

Derartige Verzüge können in zwei Gruppen, die sogenannten deterministischen und die sogenannten nicht-deterministischen Verzüge, unterteilt werden. Deterministische Verzüge sind dadurch charakterisiert, dass sie bei einer Erzeugung mehrerer 3D-Strukturen mit den gleichen 3D-Druckdaten beziehungsweise Druckparametern erneut auftreten und somit reproduzierbar sind.

Beispiele für derartige deterministische Verzüge:
- Stoffbedingt, durch Abweichungen in der Korngröße und Kornverteilung des partikelförmigen Baumaterials;
- Anlagenbedingt, durch Abweichungen in den Fertigungstoleranzen, durch Maschinenschwingungen oder mechanische Verzüge innerhalb des 3D-Druckers;
- Fertigungsverfahrensbedingt, durch Abweichungen zwischen Soll- zu Ist-Werten von Geschwindigkeiten der Arbeitsmittel des 3D-Druckers wie einem Druckkopf, einem Auftragselement oder einem Mittel zum Glätten, durch Abweichungen des Zeitpunkts der exakten Düsenansteuerung des Druckkopfes oder durch Abweichungen der auszugebenden Bindermenge einer Düse des Druckkopfes usw.;
- Diffusionsprozesse beispielsweise in einer Mikrowelle oder einem Sinterofen beim Aushärten der 3D-Struktur;
- Reinigungsschritte, Nachverarbeitungsschritte und/oder Transportschritte.

Nicht-deterministische Verzüge:
- treten nicht stabil systematisch, sondern zufällig auf und sind nicht reproduzierbar.

Bedingt durch derartige auftretende deterministische Verzüge muss der Prozess der Erzeugung von 3D-Strukturen für jede neue Geometrie beziehungsweise 3D-Struktur eingefahren werden. Um auf ein aufwändiges mechanisches Justieren der Bauteile und Baugruppen des 3D-Druckers verzichten zu können, besteht die Möglichkeit, die 3D-Druckdaten manuell anzupassen, um die Soll-Geometrie zu erreichen.

In diesem Zusammenhang muss mindestens einmal eine Erfassung der erzeugten 3D-Struktur beispielsweise mittels eines 3D-Scans erfolgen, um Daten der Geometrie der erzeugten 3D-Struktur bereitzustellen. Ein Einsatz anderer geeigneter Verfahren zur Erfassung von Abmessungen der erzeugten 3D-Struktur ist möglich.

Ein Problem bei einer derartigen Vermessung einer erzeugten 3D-Strukur beispielsweise mittels eines 3D-Scanverfahrens liegt darin, dass ein 3D-Scanverfahren möglicherweise nicht zu allen Bereichen der erzeugten 3D-Struktur Scandaten, beispielsweise in der Form einer sogenannten Punktwolke, bereitstellen kann. Eine derartige Punktwolke umfasst die durch das 3D-Scanverfahren erzeugten dreidimensionalen Messpunkte, welche die Oberfläche der 3D-Struktur beschreiben.

Ursache für fehlende Scandaten zur Beschreibung der Oberfläche der 3D-Struktur sind Bereiche der erzeugten 3D-Struktur, welche von den Sensoren einer 3D-Scanvorrichtung nicht erreicht werden können, da diese Bereiche hinter den für die Sensoren einer 3D-Scanvorrichtung "sichtbaren" Bereichen liegen. Derartige Bereiche werden auch als Hinterschneidungen, tote Bereiche, tote Winkel beziehungsweise nachfolgend als ungescannte Bereiche bezeichnet.

Als ungescannte Bereiche können auch jene Bereiche angesehen werden, in welchen nur sehr wenige Messpunkte bei einem 3D-Scan erzeugt wurden. Eine zu geringe Messpunktdichte ermöglicht nur eine eingeschränkte oder keine Aussage zu möglichen Abweichungen zwischen einem Ist-Modell einer 3D-Struktur und dem Soll-Modell dieser 3D-Struktur.

Das mittels eines 3D-Scanverfahrens erzeugte Modell der Oberfläche der erzeugten 3D-Struktur bildet die erzeugte 3D-Struktur in Form von Daten der gescannten Ist-Geometrie somit nicht vollständig ab und weist sogenannte ungescannte Bereiche auf.

Derartige ungescannte Bereiche können beispielsweise durch eine Interpolation geschlossen werden, wobei hierdurch beispielsweise eine Fläche über dem offenen Bereich gebildet wird. Aufgrund der nur wenigen durch das 3D-Scanverfahren erzeugten Messpunkte im oder in der Nähe des ungescannten Bereichs, welche meist nur am Rand des ungescannten Bereichs liegen, kann eine exakte Nachbildung der genauen Außenkonturen der Oberfläche der 3D-Struktur in diesen ungescannten Bereichen nicht erfolgen. Für den Fall, dass einige wenige erzeugte Messpunkte im ungescannten Bereich vorhanden sind, erfolgt die Nachbildung der Oberfläche beziehungsweise der Konturen der 3D-Struktur zum Teil stufen- beziehungsweise treppenartig und entspricht somit auch nicht dem genauen Verlauf der Oberfläche beziehungsweise Außenkonturen der 3D-Struktur.

Bei weniger komplexen 3D-Strukturen stellt dieser Vorgang einer derartigen Bereichs- oder Flächenschließung eine mögliche Annäherung an die erzeugte Ist-Geometrie der Oberfläche der 3D-Struktur dar. Bei Anwendungen mit geringen vorgegebenen Toleranzen zwischen der Soll-Geometrie der 3D-Struktur und der Ist-Geometrie der 3D-Struktur sind derartige Verfahren der Bereichs- oder Flächenschließung meist zu ungenau.

Gemäß dem vorliegenden Verfahren zur Herstellung einer 3D-Struktur in einem 3D-Druckverfahren ist es vorgesehen,
- dass für eine zu erzeugende 3D-Struktur aus 3D-Druckdaten, welche Daten einer Soll-Geometrie der 3D-Struktur sind, erste Schichtdaten für die einzelnen Schichten der zu erzeugenden 3D-Struktur bereitgestellt werden, mit welchen die Erzeugung der 3D-Struktur in einem 3D-Druckverfahren gesteuert wird,
- dass eine erzeugte 3D-Struktur dreidimensional vermessen wird, wobei in der Praxis unvollständige dreidimensionale Daten einer gescannten Ist-Geometrie der 3D-Struktur, einer Oberfläche der erzeugten 3D-Struktur, erzeugt werden, welche in einem Modell abgebildet werden und einen oder mehrere ungescannte Bereiche aufweist,
- dass in einem Projektionsschritt erste Abweichungen zwischen korrespondierenden Punkten P und P' in den gescannten Bereichen bestimmt werden, wobei der Punkt P jeweils auf einer Oberfläche der Soll-Geometrie der 3D-Struktur und der zugehörige Punkt P' jeweils auf dem Modell der Oberfläche der gescannten Ist-Geometrie der 3D-Struktur liegt,
- dass diese ermittelten ersten Abweichungen als Abweichungsdaten zu zugehörigen Punkten P₁, P₂, P₃, ...,Pₙ der Daten der Soll-Geometrie der 3D-Struktur mit ihrem Wert gespeichert werden,
- dass in einem Vervollständigungsschritt eine Vervollständigung der zu den ungescannten Bereichen der Oberfläche der erzeugten 3D-Struktur gehörenden weiteren Abweichungen unter Zuhilfenahme der Daten der Soll-Geometrie der 3D-Struktur sowie den bereits ermittelten ersten Abweichungsdaten erfolgt und dass die erzeugten weiteren Abweichungsdaten zu zugehörigen Punkten P der Daten der Soll-Geometrie der 3D-Struktur mit ihrem Wert gespeichert werden und dass derart vollständige Abweichungsdaten erzeugt sind,
- dass korrigierte 3D-Druckdaten in einem Deformationsschritt erzeugt werden, bei welchem Punkte P der Daten der Soll-Geometrie der 3D-Struktur in Abhängigkeit von der zum jeweiligen Punkt P ermittelten und gespeicherten ersten oder weiteren Abweichung in einer der ermittelten ersten oder weiteren Abweichung entgegengesetzten Richtung um einen von der ersten oder weiteren Abweichung abhängigen Betrag des gespeicherten Werts verschoben werden,
- dass mittels dieser korrigierten 3D-Druckdaten die Erzeugung nachfolgender 3D-Strukturen in einem 3D-Druckverfahren gesteuert wird.

Daten einer Soll-Geometrie der 3D-Struktur werden, wie aus dem Stand der Technik bekannt, in Daten für die einzelnen Schichten der zu erzeugenden 3D-Struktur überführt und mittels dieser Daten die Erzeugung einer 3D-Struktur in einem 3D-Drucker gesteuert.

Die derart erzeugte 3D-Struktur wird beispielsweise aus dem Druckbett des 3D-Druckers entnommen, nachbehandelt und gereinigt. Dieser Schritt kann auch den Vorgang des Aushärtens der 3D-Struktur einschließen.

Die erzeugte 3D-Struktur wird in einem Vermessungsschritt dreidimensional vermessen. Dieser Messvorgang kann beispielsweise mittels einer entsprechenden Laserscan-Vorrichtung durchgeführt werden. Im Ergebnis einer derartigen Messung liegen dreidimensionale, in der Praxis häufig unvollständige Daten der Ist-Geometrien der erzeugten 3D-Struktur als ein Modell der Ist-Geometrie vor. Diese Daten sind unvollständig, da Daten für ungescannte Bereiche fehlen, welche beim dreidimensionalen Vermessen nicht erreicht wurden.

Nachfolgend werden erste Abweichungen zwischen korrespondierenden Punkten P' und P auf einer Oberfläche des Modells der Ist-Geometrie der 3D-Struktur und zugehörigen Punkten auf der Oberfläche der Soll-Geometrie der 3D-Struktur in den gescannten Bereichen in einem Projektionsschritt bestimmt.

Die Bestimmung dieser ersten Abweichungen mit ihrem Betrag kann für jeden in den 3D-Druckdaten vorhandenen Punkt P' auf der Oberfläche des Modells der Ist-Geometrie der 3D-Struktur und einem jeweils zugehörigen, korrespondierenden Punkt P auf der Oberfläche der Soll-Geometrie der 3D-Struktur vorgenommen werden. Liegt beispielsweise ein mittels eines Laserscans ermittelter Punkt P' auf der Oberfläche des Modells der Ist-Geometrie der erzeugten 3D-Struktur unterhalb der Oberfläche der Soll-Geometrie der zu erzeugenden 3D-Struktur, weist die Abweichung an diesem Punkt P ein Untermaß auf.

Für den Fall, dass ein mittels eines Laserscans ermittelter Punkt P' auf der Oberfläche des Modells der Ist-Geometrie der erzeugten 3D-Struktur über der Oberfläche der Soll-Geometrie der zu erzeugenden 3D-Struktur liegt, weist die Abweichung an diesem Punkt P ein Übermaß auf.

Für den Fall, dass ein mittels eines Laserscans ermittelter Punkt P' auf der Oberfläche des Modells der Ist-Geometrie der erzeugten 3D-Struktur auf der Oberfläche der Soll-Geometrie der zu erzeugenden 3D-Struktur liegt, tritt keine Abweichung an diesem Punkt P auf.

Bei der Ermittlung der Abweichungen, wie beispielsweise der ersten Abweichungen, werden korrespondierende Punkte P' und P auf dem Modell der Ist-Geometrie der erzeugten 3D-Struktur und der Soll-Geometrie der zu erzeugenden 3D-Struktur paarweise verglichen, welche ohne eine auftretende Abweichung zwischen den Oberflächen der Ist-Geometrie und der Soll-Geometrie der 3D-Struktur aufeinander liegen würden.

Für jeden dreidimensionalen Punkt P auf der Soll-Geometrie der 3D-Struktur, zu welchem im Modell der Daten der gescannten Ist-Geometrie ein korrespondierender Punkt P' im Scanvorgang ermittelt worden ist, kann oder wird eine erste Abweichung zwischen der Ist-Geometrie der 3D-Struktur und der Soll-Geometrie der 3D-Struktur in einem Projektionsschritt ermittelt und gespeichert. Somit können die ersten Abweichungen nicht in ungescannten Bereichen bestimmt werden, da in diesen Bereichen kein Punkt P' im Modell der Daten der gescannten Ist-Geometrie bereitgestellt werden konnte.

Alternativ kann die Bestimmung dieser ersten Abweichungen für vorgegebene Bereiche auf der Oberfläche der 3D-Struktur vorgenommen werden. Derartige Abweichungen können auch einen Mittelwert für einen vorgegebenen Bereich auf der Oberfläche der 3D-Struktur sein.

Die derart ermittelten ersten Abweichungen werden als Abweichungsdaten zu zugehörigen Punkten P der Daten der Soll-Geometrie der 3D-Struktur mit ihrem Wert gespeichert und können somit im weiteren Verfahrensablauf genutzt werden.

Die zu den gescannten Bereichen ermittelten ersten Abweichungen werden beim Prozess der Ermittlung von weiteren Abweichungen beziehungsweise weiteren Abweichungsdaten in den ungescannten Bereichen der Oberfläche des Modells der erzeugten 3D-Struktur genutzt. Sind ermittelte erste Abweichungen an einem Rand eines ungescannten Bereichs bekannt, kann angenommen werden, dass sich die ermittelten ersten Abweichungen am Rand des ungescannten Bereichs auch in den ungescannten Bereich mit einem vergleichbaren Betrag beziehungsweise Wert weiter fortsetzen.

Da die ermittelten ersten Abweichungen an den Rändern der ungescannten Bereiche bekannt sind, kann die Ermittlung von weiteren Abweichungen beziehungsweise weiteren Abweichungsdaten in den ungescannten Bereichen derart vorgenommen werden, dass diese Informationen von bekannten Punkten im gescannten Bereich nacheinander auf Punkte im ungescannten Bereich,unter Zuhilfenahme kleiner angenommener Teilflächen erfolgt und derart eine schrittweise Vervollständigung der zu den ungescannten Bereichen fehlenden weiteren Abweichungen erreicht wird. Hierbei liegen die Punkte an Eckpunkten der kleinen angenommenen Teilflächen, welche beispielsweise die bei einem Vorgang einer Triangulation der Oberfläche der zu erzeugenden Soll-Struktur genutzten dreieckförmigen Teilflächen sind.

Derartige den ungescannten Bereich auffüllende Teilflächen können n-Ecke oder Freiformflächen mit Eckpunkten, insbesondere Dreiecke, sein. Nachfolgend wird das Verfahren vorzugsweise an durch dreieckförmige Teilflächen beschriebene Soll-Geometrien erläutert, was keine Einschränkung des Verfahrens auf diese Teilflächen bedeutet.

Hierbei werden sowohl die bereits ermittelten ersten Abweichungsdaten als auch die noch für die ungescannten Bereiche zu ermittelnden weiteren Abweichungsdaten zu Punkten P an den Ecken der Teilflächen ermittelt und gespeichert. Bei der Verwendung von Freiformflächen werden die Abweichungsdaten zu entsprechend festlegbaren Punkten gespeichert.

Hierbei ist es vorgesehen, dass mit der Ermittlung von weiteren Abweichungen in den ungescannten Bereichen am Rand des ungescannten Bereichs begonnen wird und dieser Vorgang in Richtung eines angenommenen Zentrums des ungescannten Bereichs fortgesetzt wird.

Außerdem ist es vorgesehen, dass die kleinen Teilflächen der Soll-Geometrie mit ihren jeweiligen Eckpunkten, welche zur Ermittlung von weiteren Abweichungen in den ungescannten Bereichen verwendet werden, beispielsweise dreieckförmige Teilflächen sind. Mittels dieser kleinen dreieckförmigen Teilflächen erfolgt die iterative Ermittlung von weiteren Abweichungen am Rand des ungescannten Bereichs beginnend, bis für den ungescannten Bereich alle weiteren Abweichungen ermittelt und zu den jeweiligen Punkten gespeichert sind.

Der Vorgang der Ermittlung von weiteren Abweichungen beziehungsweise weiteren Abweichungsdaten wird nachfolgend an einem Beispiel näher erläutert:
Eine Voraussetzung für die Ermittlung weiterer Abweichungen ist es, dass die Oberfläche des Soll-Bauteils, also die Oberfläche der Soll-Geometrie der 3D-Struktur, bereits in einer triangulierten Form vorliegt. Eine derartige Triangulation erfolgt in einem Umwandlungsschritt, wobei die Oberfläche der Soll-Geometrie der zu erzeugenden 3D-Struktur vollständig beispielsweise mittels mehrerer dreieckförmiger Teilflächen überdeckt oder nachgebildet wird, wobei den Ecken der Teilflächen jeweils Punkte in der Form P₁, P₂, P₃, ...,Pₙ zugeordnet werden. Somit liegen Daten zu Nachbarschaftsbeziehungen von Punkten P₁, P₂, P₃, ...,Pₙ an den Ecken der dreieckförmigen Teilflächen vor, welche nachfolgend genutzt werden.

Es werden dreieckförmige Teilflächen auf der Oberfläche der Soll-Geometrie bestimmt, welche am Rand des ungescannten Bereichs liegen und bei welchen an zwei Ecken bereits erste Abweichungsdaten in einem Projektionsschritt bestimmt wurden. Im Beispiel kann das eine dreieckförmig Teilfläche eines Dreiecks mit den Eckpunkten P₁, P₂, P₃ sein, zu welchem erste Abweichungen zu den Eckpunkten P₁ und P₂ bekannt sind, da hier zwei erste Abweichungen jeweils zwischen korrespondierenden Punkten P₁ und P₁' sowie P₂ und P₂' ermittelt werden konnten. Eine Ermittlung von Abweichungen zwischen korrespondierenden Punkten P und P' ist in den ungescannten Bereichen jedoch nicht möglich, da in diesen Bereichen Daten zu den Punkten P' fehlen.

Bei der Bestimmung beziehungsweise Ermittlung weiterer Abweichungen wird davon ausgegangen, dass sich der Wert beziehungsweise Betrag der ermittelten ersten Abweichungen an den Rändern des ungescannten Bereichs in die ungescannten Bereiche hinein mit vergleichbaren Werten beziehungsweise Beträgen für die zu ermittelnden weiteren Abweichungen fortsetzt. Im Beispiel kann eine weitere Abweichung für den Eckpunkt P₃ mittels einer mathematischen Funktion bestimmt werden, wobei beispielsweise ein arithmetischer Mittelwert aus den zu den Punkten P₁ und P₂ bekannten ersten Abweichungen ermittelt wird. Die ermittelten ersten und weiteren Abweichungen für die Punkte P₁, P₂ und P₃ weisen einen Wert beziehungsweise Betrag für die ermittelte Abweichung auf, wobei sich die Richtungen der Abweichungen jeweils entlang der zu den Punkten P₁, P₂ oder P₃ zugehörigen Eckennormalen der dreieckförmigen Teilflächen erstecken.

Die Ermittlung einer weiteren Abweichung für den Eckpunkt P₃ mittels einer mathematischen Funktion, wie einer arithmetischen Mittelwertbildung aus den zu den Punkten P₁ und P₂ bekannten ersten Abweichungen ist beispielhaft. In der Praxis können außer einer Mittelwertbildung andere Funktionen beziehungsweise Berechnungsvorschriften hinterlegt werden, welche beispielsweise komplexere, mehrere Punkte umfassende Teilflächenkonstellationen, Prioritätengewichtungen bei stark differierenden ersten Abweichungen oder den Grad an Unsicherheit einer bestimmten weiteren Abweichung aufgrund der Entfernung zu einer ermittelten ersten Abweichung berücksichtigen.

Als Funktion kann auch eine flächengewichtende Mittelwertbildung, eine winkelgewichtende Mittelwertbildung oder eine abstandsgewichtende Mittelwertbildung genutzt werden, sodass nicht nur lediglich die Nachbarschaftsbeziehungen in die Berechnung einfließen, sondern auch die vorliegenden geometrischen Begebenheiten, etwa bei der Abstandsgewichtung nähere Punkte einen höheren Einfluss aufweisen als weiter entfernte.

Nach der Ermittlung der weiteren Abweichung für den Eckpunkt P₃ wird beispielsweise eine weitere dreieckförmige Teilfläche auf der Oberfläche der Soll-Geometrie bestimmt, welche am Rand des ungescannten Bereichs liegt und bei welcher an zwei Ecken bereits erste Abweichungsdaten im Projektionsschritt bestimmt wurden. Im Beispiel kann das ein Dreieck P₂, P₄, P₅, sein, zu welchem erste Abweichungen zu den Eckpunkten P₂ und P₄ bekannt sind, da hier die ersten Abweichungen jeweils zwischen korrespondierenden Punkten P₂ und P₂' sowie P₄ und P₄' ermittelt werden konnten. Die Ermittlung der weiteren Abweichung für den Eckpunkt P₅ erfolgt wieder beispielhaft mittels einer arithmetischen Mittelwertbildung aus den zu den Punkten P₂ und P₄ bekannten ersten Abweichungen.

Eine derartige Ermittlung von weiteren Abweichungen für den entsprechenden Eckpunkt von weiteren dreieckförmigen Teilflächen kann beispielsweise entlang des Randes des ungescannten Bereichs fortgesetzt werden, bis entlang das gesamten Randbereiches eine erste Reihe von dreieckförmigen Teilflächen zur Bestimmung der weiteren Abweichungen genutzt wurde. Dieser Vorgang der Ermittlung von weiteren Abweichungen auf der Grundlage bekannter erster Abweichungen für entsprechende Eckpunkte beziehungsweise Punkte P₁, P₂, P₃, ...,Pₙ auf der Oberfläche der Soll-Geometrie der zu erzeugenden 3D-Struktur ist ein iterativer Vorgang, bei welchem die dreieckförmigen Teilflächen der bei der Triangulation der Oberfläche der Soll-Geometrie erzeugten dreieckförmigen Teilflächen und keine bei der Ermittlung weiterer Abweichungen erzeugten dreieckförmigen Teilflächen genutzt werden.

Wurde beispielsweise eine erste Reihe von weiteren Abweichungen nahe dem Rand des ungescannten Bereichs ermittelt, kann die Ermittlung weiterer Abweichungen in einem Bereich fortgesetzt werden, welcher weiter vom Rand des ungescannten Bereichs entfernt ist, beispielsweise in einer zweiten Reihe.

Die Fortsetzung der Ermittlung weiterer Abweichungen kann mittels einer weiteren dreieckförmigen Teilfläche mit den Eckpunkten P₃, P₅, P₆ erfolgen, zu welcher die weiteren Abweichungen zu den Eckpunkten P₃ und P₅, wie oben bei der Ermittlung der weiteren Abweichungen zu den Eckpunkten P₃ und P₅ beschrieben, ermittelt wurden.

.Eine Ermittlung der weiteren Abweichung zum Eckpunkt P₆ kann in der oben beschriebenen Weise, beispielsweise mittels einer arithmetischen Mittelwertbildung, erfolgen.

Diese Fortsetzung der Ermittlung weiterer Abweichungen in einer weiteren Reihe, wobei diese weitere Reihe weiter vom Rand des ungescannten Bereichs beabstandet ist als die erste Reihe, ist beispielhaft.

Der Vorgang der Ermittlung weiterer Abweichungen zu den Punkten P₇, P₈, P₉, ..., Pₙ im ungescannten Bereich wird derart iterativ fortgesetzt, bis weitere Abweichungen beispielsweise für den gesamten ungescannten Bereich erzeugt worden sind.

Die verfahrensgemäße Ermittlung von weiteren Abweichungen zu Punkten P₁, P₂, P₃, ..., Pₙ erfolgt unabhängig vom Oberflächenverlauf der erzeugten 3D-Struktur, was einen besonderen Vorteil des Verfahrens darstellt.

Bei dieser Vorgehensweise können zwischen benachbarten Punkten P, insbesondere im Bereich eines gedachten Zentrums des ungescannten Bereichs, beispielsweise durch verschiedene erste Abweichungen an verschiedenen Rändern des ungescannten Bereichs, bei der anschließenden Deformation Stufungen auftreten. Diese Stufungen werden durch zu unterschiedliche Werte beziehungsweise Beträge der ermittelten weiteren Abweichungen beispielsweise zwischen benachbarten Punkten P verursacht.

Vorgesehen ist es, dass eine Glättung der innerhalb des ungescannten Bereichs ermittelten weiteren Abweichungen erfolgt.

Alternativ ist es vorgesehen, dass eine Glättung der ersten Abweichungen und der weiteren Abweichungen erfolgt.

Bei dieser Glättung werden ansonsten bei einem nachfolgenden Deformationsschritt auftretende Stufungen verringert, indem derartige sprunghafte Abweichungen zwischen benachbarten Abweichungswerten dadurch verringert werden, dass die zu den entsprechenden Punkten P₁, P₂, P₃, ..., Pₙ ermittelten Abweichungswerte jeweils beispielsweise mittels gewichteter Mittelwerte oder anderer Werte, wie Abstände, Winkel und Geometriekonstellationen, berücksichtigende Glättungsvorschriften für den entsprechenden Abweichungswert korrigiert werden.

Hierfür wird beispielsweise ein gewichteter Mittelwert für einen Punkt P₁ dadurch bestimmt, dass bei der gewichteten Mittelwertbildung für den Punkt P₁ der Abweichungswert für den Punkt P₁ selbst und mehrere Abweichungswerte für die den Punkt P₁ unmittelbar umgebenden, benachbarten, auch als adjazent bezeichneten Punkte P₂, P₃, ...., Pₙ, verarbeitet werden. Bei einer Verwendung von dreieckförmigen Teilflächen werden somit mindestens die Abweichungswerte von drei benachbarten Punkten P₂, P₃, P₄ und der Abweichungswert des Punktes P₁ selbst bei der gewichteten Mittelwertbildung genutzt.

Vorgesehen ist es weiterhin, dass die zu den beispielsweise dreieckförmigen Teilflächen zugehörigen Flächennormalen je Dreieck berechnet und in die zugehörigen Eckennormalen der das Dreieck beschreibenden Eckpunkte umgewandelt werden, welche im weiteren Verfahrensablauf genutzt werden.

Eine Flächennormale ist ein normierter, nach außen zeigender, auf der Oberfläche der dreieckförmigen Teilfläche senkrechter Vektor.

Für jeden Punkt wird die Eckennormale durch winkel- und flächengewichtete Addition der zu den adjazenten beziehungsweise benachbarten Dreiecken gehörigen Flächennormalen und anschließender Normierung berechnet.

Für jeden Punkt P₁, P₂, P₃, ..., Pₙ des Soll-Modells beziehungsweise der Soll-Geometrie der 3D-Struktur liegt nun verfahrensgemäß ein ermittelter erster oder weiterer Abweichungswert beziehungsweise ein Betrag und eine Eckennormale vor. Der sich aus der Multiplikation von Abweichungswert und Eckennormale ergebende Vektor entspricht nun in Richtung und Betrag dem Verschiebevektor, der jeden Punkt P der Soll-Geometrie der 3D-Struktur an seine tatsächliche Position P' im erzeugten Ist-Modell, also der Ist-Geometrie der 3D-Struktur, verschiebt.

Weist dieser Verschiebevektor an einem Punkt P₁, P₂, P₃, ..., Pₙ der Soll-Geometrie der 3D-Struktur nach außen, so bedeutet das, dass die erzeugte 3D-Struktur für diesen Punkt ein Übermaß gegenüber den Daten der vorgegebenen Soll-Struktur aufweist. Weist der Verschiebevektor eine Länge von Null auf, bedeutet dies, dass die erzeugte 3D-Struktur für diesen Punkt keine Abweichung gegenüber den Daten der vorgegebenen Soll-Struktur aufweist. Weist der Verschiebevektor eine Länge innerhalb einer Toleranz auf, führt die Abweichung nicht zu einem Verlust der Maßhaltigkeit. Zeigt der Verschiebevektor nach innen, bedeutet dies, dass die erzeugte 3D-Struktur für diesen Punkt ein Untermaß gegenüber den Daten der vorgegebenen Soll-Struktur aufweist.

Vorgesehen ist es auch, dass von mehreren erzeugten 3D-Strukturen Daten zu Ist-Geometrien der 3D-Strukturen in Modellen ermittelt werden können und dass ein Vergleich zwischen den Daten der gewünschten Soll-Geometrie der 3D-Struktur und den Daten der Anzahl von Ist-Geometrien der 3D-Strukturen erfolgt. Derart bildet sich ein mittels statistischer Verfahren erzeugter Mittelwert für die deterministischen Abweichungen, also den zu verschiedenen Punkten bestimmten Abweichungen, heraus.

Derart kann beispielsweise bei einem Auftreten einer einmaligen ersten oder weiteren Abweichung beziehungsweise einer einmaligen zu großen Abweichung eine andere Fehlerprozedur gestartet werden als bei einem Auftreten systematischer Abweichungen. Dies gilt ebenso für eine Anzahl von ersten oder weiteren Abweichungen.

Im Vorgang der Deformation kann der Punkt P zur Erzeugung der korrigierten 3D-Druckdaten in der entgegengesetzten Richtung zur ermittelten Abweichung beziehungsweise zum Verschiebevektor und beispielsweise mit dem Betrag desselben verschoben werden. In einem Beispiel kann der Punkt P₁, zu welchem als Abweichung ein Untermaß von 0,2 mm ermittelt worden ist, um den Betrag von 0,2 mm, in entgegengesetzter Richtung der ermittelten Abweichung nach außen verschoben werden. Derart werden deterministische Verzüge korrigiert.

Umgekehrt kann beispielsweise ein Übermaß von 0,1 mm an einem bestimmten Punkt P₂ auf der Oberfläche der erzeugten 3D-Struktur dadurch beseitigt werden, dass die korrigierten 3D-Druckdaten für diesen Punkt die Erzeugung einer nachfolgenden 3D-Struktur mit einem Untermaß von 0,1 mm vorgeben. Derart werden ebenfalls deterministische Verzüge korrigiert.

Alternativ kann bei der Deformation eine Verschiebung eines Punkts P₁, P₂, P₃, ..., Pₙ in der entgegengesetzten Richtung zur ermittelten Abweichung nur um einen Teilbetrag oder einen erhöhten Betrag des ermittelten Betrags dieser Abweichung erfolgen. Diese Teilbeträge können anwenderspezifisch nach festgelegten Bereichen der 3D-Struktur oder aufgrund der vorliegenden Geometrie festgelegt werden. So kann eine Verschiebung beispielsweise stufenartig 50 %, 75 %, 90 %, 110 %, 125 % oder 150 % des ermittelten Betrags einer ersten oder weiteren Abweichung betragen.

Vorgesehen ist es weiterhin, dass im Deformationsschritt die Punkte P₁, P₂, P₃, ...,Pₙ der Daten der Soll-Geometrie der 3D-Struktur um ein Produkt verschoben werden, welches sich aus einem zu einer ersten oder weiteren Abweichung gespeicherten Wert als erster Faktor und einem zweiten Faktor ergibt, welcher im Bereich zwischen 0,3 und 1,7 liegt. Derart kann die Deformation innerhalb des beschriebenen Bereichs stufenlos angepasst werden.

Vorgesehen ist es, dass auch aus den korrigierten 3D-Druckdaten Daten für die einzelnen Schichten der herzustellenden 3D-Struktur bereitgestellt werden, mit welchen die Erzeugung der 3D-Struktur in einem 3D-Druckverfahren gesteuert wird. Derartige Daten werden auch als Schichtdaten bezeichnet.

In einer Alternative kann es vorgesehen werden, dass die ermittelten ersten und weiteren Abweichungen zur Korrektur der bereits für den ersten Druck vorliegenden 3D-Druckdaten der einzelnen Schichten genutzt werden. Derart werden korrigierte 3D-Druckdaten der einzelnen Schichten der herzustellenden 3D-Struktur erzeugt, welche direkt zur Erzeugung der nachfolgenden 3D-Struktur im 3D-Druckverfahren genutzt werden können. Die Umwandlung der korrigierten 3D-Druckdaten in Daten für die einzelnen Schichten der herzustellenden 3D-Struktur entfällt somit.

Mittels der derart korrigierten 3D-Druckdaten wird nachfolgend eine Erzeugung einer weiteren 3D-Struktur gesteuert. Diese korrigierten 3D-Druckdaten berücksichtigen somit die Deformationen beziehungsweise Abweichungen der Ist-Geometrie der erzeugten 3D-Struktur gegenüber der vorgegebenen Soll-Geometrie der zu erzeugenden 3D-Struktur. So kann beispielsweise eine ermittelte erste oder weitere Abweichung wie ein Untermaß von 0,2 mm an einem bestimmten Punkt auf der Oberfläche der erzeugten 3D-Struktur dadurch beseitigt werden, dass die korrigierten 3D-Druckdaten für diesen Punkt die Erzeugung einer nachfolgenden 3D-Struktur mit einem Übermaß von 0,2 mm vorgeben.

In diesem Beispiel würde die ermittelte Abweichung beispielsweise zu einem Punkt P auf der vorgegebenen Soll-Geometrie der zu erzeugenden 3D-Struktur mit ihrer Richtung gemäß der Eckennormalen und ihrem Betrag von 0,2 mm gespeichert werden. In diesem Fall eines Untermaßes wäre die Richtung der ermittelten Abweichung in die zu erzeugende 3D-Struktur beziehungsweise in die vorgegebene Soll-Geometrie der zu erzeugenden 3D-Struktur hinein beziehungsweise nach innen gerichtet. Im Fall eines Übermaßes wäre die Richtung der ermittelten Abweichung von der zu erzeugenden 3D-Struktur beziehungsweise von der vorgegebenen Soll-Geometrie der zu erzeugenden 3D-Struktur weg beziehungsweise nach außen gerichtet.

Vorgesehen ist es verfahrensgemäß, dass eine Steuerung des 3D-Druckverfahrens zur Kompensation von ermittelten Abweichungen beziehungsweise deterministischen Verzügen auf der Grundlage einer korrespondierende Punkte umfassenden Ermittlung von ersten und weiteren Abweichungsdaten zwischen der Ist-Geometrie der zu erzeugenden 3D-Struktur und den Daten der Soll-Geometrie der zu erzeugenden 3D-Struktur über die gesamte Oberfläche beziehungsweise Außenkontur der 3D-Struktur erfolgt. Durch die verfahrensgemäße Bestimmung von Abweichungen beziehungsweise Abweichungsdaten zu Punkten in den ungescannten Bereichen kann auch für nicht erfassbare ungescannte Bereiche eine Bestimmung von Abweichungen beziehungsweise deterministischen Verzügen erfolgen.

Liegen durch den Vorgang der Ermittlung von weiteren Abweichungsdaten in den ungescannten Bereichen vollständige Abweichungsdaten vor, wird eine sogenannte deformierte 3D-Struktur erzeugt, welche die korrigierten 3D-Druckdaten repräsentiert. Es wird davon ausgegangen, dass die Herstellung einer 3D-Struktur mittels dieser korrigierten 3D-Druckdaten die deterministischen stoff-, prozess- und anlagenbedingten Verzüge kompensiert und derart eine 3D-Struktur erzeugt wird, welche bestmöglich den Daten der Soll-Geometrie der vorgegebenen 3D-Struktur, also den vom CAD-System erhaltenen 3D-Druckdaten, entspricht.

Die Erzeugung der deformierten 3D-Struktur beziehungsweise der korrigierten 3D-Druckdaten umfasst nachfolgende Schritte:
Im ersten Schritt werden die Flächennormalen des triangulierten Soll-Bauteils aus den ursprünglich vorgegebenen 3D-Druckdaten, welche Daten der Soll-Geometrie der 3D-Struktur sind, berechnet. Derartige Flächennormale werden beispielsweise für kleine dreieckförmige, die Oberfläche der 3D-Struktur nachbildende Teilflächen ermittelt. Eine Nachbildung der Oberfläche der 3D-Struktur kann auch mit von einem Dreieck abweichenden Teilflächen erfolgen.

Aus diesen Flächennormalen werden die Eckennormalen berechnet.

Für jede beispielsweise dreieckförmige Teilfläche liegt nun mit den Eckennormalen die Verschiebungsrichtung vor, entlang derer die bestimmten Abweichungen zugeordnet werden. Jeder Punkt P₁, P₂, P₃, ...,Pₙ einer dreieckförmigen Teilfläche kann entlang seiner Eckennormalen verschoben werden.

Die Stärke der Verschiebung entlang der Eckennormalen ergibt sich aus dem Wert der jeweiligen ermittelten Abweichung an einem Punkt P₁, P₂, P₃, ...,Pₙ, durch welchen die Eckennormale verläuft. Die Verschiebung kann als Vektor verstanden werden, welcher seinen Ursprung in einem Punkt P₁, P₂, P₃, ...,Pₙ auf der Oberfläche der Soll-Geometrie der zu erzeugenden 3D-Struktur, durch welchen eine Eckennormale verläuft, hat. Dieser Vektor ist parallel zur zugehörigen Eckennormale in eine von zwei möglichen Richtungen ausgerichtet. Ist die für einen Punkt P₁, P₂, P₃, ...,Pₙ auf der Oberfläche der Soll-Geometrie ermittelte Abweichung größer Null, ist der Vektor von der 3D-Struktur weggerichtet. Ist die für einen Punkt auf der Oberfläche der Soll-Geometrie ermittelte Abweichung kleiner Null, ist der Vektor entgegengesetzt in die 3D-Struktur gerichtet.

Bei der Erzeugung der deformierten 3D-Struktur beziehungsweise der korrigierten 3D-Druckdaten, kurz als Deformation beziehungsweise Deformationsschritt bezeichnet, wird ein Punkt auf der Oberfläche der zu erzeugenden 3D-Struktur, welcher in den Daten der Soll-Geometrie der 3D-Struktur enthalten ist, entlang der zugehörigen Eckennormalen verschoben. Hierbei wird dieser Punkt um einen von der ermittelten ersten oder weiteren Abweichung an diesem Punkt abhängigen Betrag und in einer zu der ermittelten Abweichung entgegengesetzten Richtung verschoben.

Diese Deformation der Punkte P₁, P₂, P₃, ...,Pₙ der Oberfläche der Soll-Geometrie der 3D-Struktur wird für eine bestimmte Anzahl von Punkten, für ausgewählte Punkte oder für alle Punkte durchgeführt und derart eine deformierte 3D-Struktur beziehungsweise die korrigierten 3D-Druckdaten erzeugt.

Diese korrigierten 3D-Druckdaten der deformierten 3D-Struktur werden wie üblich in Schichtdaten zerschnitten (Slicen) und derart die das 3D-Druckverfahren steuernden Geometriedaten beziehungsweise Schichtdaten generiert.

In einer alternativen Variante des Verfahrens zur Herstellung einer 3D-Struktur in einem 3D-Druckverfahren ist es vorgesehen, anstatt einer Deformation des Soll-Bauteils eine Transformation der mit Abweichungsdaten versehenen Punkte P₁, P₂, P₃, ...,Pₙ in das Koordinatensystem der bereits aus dem ersten Druck vorliegenden Schichtdaten vorzunehmen und derart korrigierte Schichtdaten zu erhalten, mit welchen die Erzeugung einer 3D-Struktur im 3D-Drucker gesteuert wird.

Vorgesehen ist es auch, dass korrigierte 3D-Druckdaten oder korrigierte 3D-Druckdaten der einzelnen Schichten der herzustellenden 3D-Struktur unabhängig von der Größe der bestimmten Abweichungen verfahrensgemäß erstellt werden. Derart werden auch kleinste erfasste Abweichungen bei der Deformation verarbeitet und wirken sich auf die zu erzeugenden korrigierten 3D-Druckdaten aus.

Ein das vorliegende Verfahren zur Herstellung einer 3D-Struktur in einem 3D-Druckverfahren umsetzendes Programm wird beispielsweise in einer einen Druckjob vorbereitenden Steuereinheit, in einem CAD-Rechner oder in einer zentralen Steuereinheit des 3D-Druckers ausgeführt. Diese zentrale Steuereinheit steuert auch den Ablauf der Erzeugung der 3D-Struktur auf der Grundlage der an sie übergebenen 3D-Daten der Abmessungen der zu erzeugenden 3D-Struktur. Derartige Daten können beispielsweise von einem rechnerunterstützten Konstruktionssystem erzeugt und an die zentrale Steuereinheit übergeben werden.

Somit verfügt beziehungsweise erzeugt die zentrale Steuereinheit Parameter zur Ansteuerung des 3D-Druckers wie beispielsweise den Parameter des Ansteuerzeitpunkts einer Düse oder den Parameter der Bewegungsgeschwindigkeit von Arbeitsmitteln des 3D-Druckers über dem Baufeld. Somit kann beispielsweise der Parameter Ansteuerzeitpunkt einer Düse durch die zentrale Steuereinheit beeinflusst werden. Dieser Parameter Ansteuerzeitpunkt einer Düse kann durch die zentrale Steuereinheit gegenüber seinem vorgegebenen Wert des Ansteuerzeitpunkts zeitlich verschoben werden, so dass der verschobene Ansteuerzeitpunkt zeitlich vor oder nach dem vorgegebenen Wert des Ansteuerzeitpunkts liegt. Die Richtung dieser Verschiebung ist abhängig von der Richtung der ermittelten Abweichung der Abmessungen.

Während nach dem bekannten Stand der Technik meist nur eine kleine Zahl von beispielsweise 30 vermeintlich repräsentativen Messpunkten an einer 3D-Stuktur festgelegt und zur Qualitätssicherung herangezogen werden, wird durch das erfindungsgemäße Verfahren die Situation der Qualitätskontrolle massiv verbessert.

Das Verfahren löst dieses Problem durch eine Vervollständigung unvollständiger Messungen, eine Möglichkeit der Zusammenführung mehrerer Messungen eines einzelnen erzeugten Bauteils sowie der Möglichkeit des Vergleichs von Messungen an verschiedenen gleichartigen Bauteilen, wenn mehrfach die gleiche Geometrie gedruckt wird.

Dieser Vergleich wird dadurch ermöglicht, dass die ermittelten Abweichungen zu Punkten P der Soll-Geometrie der 3D-Struktur gespeichert werden. Derart dient die Soll-Geometrie der 3D-Struktur gewissermaßen als gemeinsame Referenzierungsgrundlage der verschiedenen ermittelten Abweichungen und macht sie so vergleichbar, da Abweichungen, welche zu mehreren erzeugten 3D-Strukturen ermittelt werden, immer zum gleichen Punkt P auf der Soll-Geometrie der 3D-Struktur zugeordnet beziehungsweise gespeichert werden.

Durch den Vervollständigungsprozess, also eine Erzeugung weiterer Abweichungsdaten für ungescannte Bereiche, ist es möglich bei allen Messungen eine vergleichbare Anzahl von Messpunkten zu verarbeiten, was sowohl die Möglichkeit des oben angesprochenen Vergleichs wie auch den Vorgang der beschriebenen Deformation qualitativ verbessert.

Ein Vorteil des Verfahrens besteht auch darin, dass ermittelte erste und weitere Abweichungen aus verschiedenen Messungen einer erzeugten 3D-Struktur zu zugehörigen Punkten P der Daten der Soll-Geometrie der 3D-Struktur gespeichert werden können und dass auf diese Weise eine Zusammenführung unterschiedlicher Messungen an einer 3D-Struktur erfolgen kann. Derart können Bereiche der 3D-Struktur erfasst werden, auf denen die erzeugte 3D-Struktur während eines ersten dreidimensionalen Scans steht oder aufliegt.

Weiterhin ist es möglich, mehrere 3D-Strukturen zu erzeugen und die vervollständigten Abweichungsdaten aller erzeugten 3D-Strukturen auf die beschriebene Weise zu bestimmen, um durch statistische Verfahren deterministische von nicht-deterministischen Verzügen unterscheiden zu können.

Vorgesehen ist es im vorliegenden Verfahren auch, dass eine mittels korrigierter 3D-Druckdaten nachfolgend erzeugte 3D-Struktur dreidimensional vermessen wird, um erneut erste und weitere beziehungsweise vollständige Abweichungen zwischen der Soll-Geometrie der zu erzeugenden 3D-Struktur und der Ist-Geometrie der nachfolgend erzeugten 3D-Struktur zu ermitteln. Die nunmehr erhaltenen vollständigen Abweichungen beziehungsweise vollständigen Abweichungsdaten werden nachfolgend für eine Deformation der bereits korrigierten 3D-Druckdaten genutzt.

Somit stellt sich eine erneute Maßhaltigkeitsverbesserung ein. Dieses Verfahren kann iteriert werden. Eine Möglichkeit ist es, die beschriebene Iteration nicht unmittelbar hintereinander bei jeder erzeugten 3D-Struktur auszuführen, sondern mit einem zeitlichen Abstand beziehungsweise erst nach der Erzeugung einer vorgegebenen Anzahl von 3D-Strukturen, um etwaigen mechanischen Veränderungen im 3D-Drucker oder den nachgelagerten Prozessen entgegenzuwirken. Die Erkennung der Notwendigkeit einer weiteren Iteration ergibt sich alternativ durch Bewertung der Maßhaltigkeit der erzeugten 3D-Strukturen über die Zeit hinweg.

Somit wird die Genauigkeit beziehungsweise Maßhaltigkeit iterativ verfeinert, sowie ein selbstregelnder Anpassungsprozess in der Serienfertigung ermöglicht.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigt:
- Fig. 1:: einen beispielhaften Ablaufplan für das erfindungsgemäße Verfahren,
- Fig. 2:: einen beispielhaften Ablaufplan für den Vorgang einer Vervollständigung der zu den ungescannten Bereichen der Oberfläche der erzeugten 3D-Struktur gehörenden fehlenden Abweichungsdaten,
- Fig. 3:: einen beispielhaften Ablauf für einen Glättungsschritt,
- Fig. 4:: eine mittels des 3D-Druckverfahrens zu erzeugende 3D-Struktur, also eine Soll-Geometrie der 3D-Struktur,
- Fig. 5:: eine mittels des 3D-Druckverfahrens erzeugte 3D-Struktur also eine Ist-Geometrie der 3D-Struktur,
- Fig. 6:: ein Modell der im Vermessungsschritt bereitgestellten Daten der gescannten Ist-Geometrie der 3D-Struktur,
- Fig. 7:: eine Schnittdarstellung durch das in der Fig. 6 dargestellte Modell beziehungsweise die Daten der gescannten Ist-Geometrie,
- Fig. 8:: eine Visualisierung des Projektionsschritts 9, in welchem die Daten der Ist-Geometrie und die Daten der Soll-Geometrie übereinander projiziert und erste Abweichungsdaten erzeugt werden,
- Fig. 9:: eine beispielhafte Ermittlung von weiteren Abweichungen für die ungescannten Bereiche,
- Fig. 10:: einen Vorgang der Ermittlung von weiteren Abweichungen auf der Grundlage bekannter erster Abweichungen,
- Fig. 11:: eine Fortsetzung der Ermittlung weiterer Abweichungen in einer weiteren Reihe,
- Fig. 12:: eine vervollständigte Erzeugung von Abweichungen für den gesamten ungescannten Bereich,
- Fig. 13a, 13b:: einen auszugsweisen, in einem Deformationsschritt ablaufenden Vorgang der Deformation und der Erzeugung der korrigierten 3D-Druckdaten und
- Fig. 14:: eine Darstellung einer vollständigen Deformation beziehungsweise vollständigen Erzeugung der korrigierten 3D-Druckdaten.

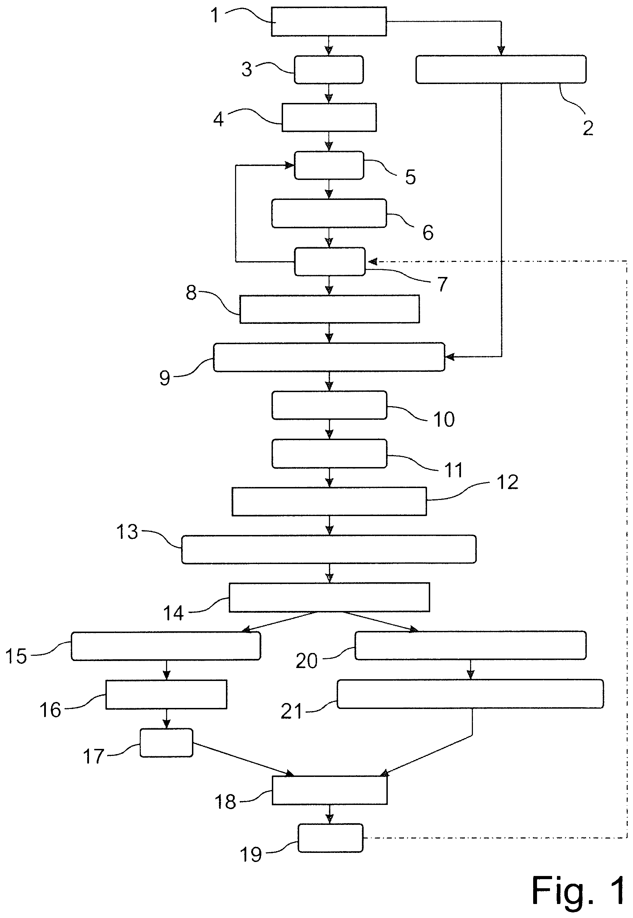

In der **Fig. 1** ist ein beispielhafter Ablaufplan für das erfindungsgemäße Verfahren gezeigt.

Das Verfahren startet im Bereitstellungsschritt 1 mit der Bereitstellung der 3D-Druckdaten, welche Daten einer gewünschten Soll-Geometrie 30 einer zu erzeugenden 3D-Struktur sind. Derartige 3D-Druckdaten können beispielsweise von einem rechnerunterstützten Konstruktionssystem bereitgestellt werden.

In einem Umwandlungsschritt 2 werden diese 3D-Druckdaten, also die Daten der Soll-Geometrie 30 der 3D-Struktur einmalig in Teilflächen, wie beispielsweise kleine dreieckförmige die Außenkonturen der zu erzeugenden 3D-Struktur 30 beschreibende Teilflächen, umgewandelt. Es erfolgt also eine Triangulation, bei welcher die Oberfläche der Soll-Geometrie 30 der zu erzeugenden 3D-Struktur vollständig beispielsweise mittels dreieckförmiger Teilflächen überdeckt wird.

Zu diesen in einer Dreieckform vorliegenden Teilflächen wird je Dreiecksfläche die zugehörige Flächennormale bestimmt und darauf aufbauend, für jeden Eckpunkt die zugehörige Eckennormale berechnet, welche im weiteren Verfahrensablauf genutzt werden. Die in dieser gewandelten Form vorliegenden Daten der Soll-Geometrie 30 der 3D-Struktur werden für die spätere Ermittlung von Abweichungen zwischen korrespondierenden Punkten, das heißt einem Punkt P' 36 auf der Oberfläche der Ist-Geometrie 31 der 3D-Struktur und seinem zugehörigen, korrespondierenden Punkt P 37 auf der Oberfläche der Soll-Geometrie 30 der 3D-Struktur benötigt. Hierbei ist es beispielsweise bei dreieckförmigen Teilflächen vorgesehen, dass die Punkte P₁, P₂, P₃, ...,Pₙ an den Ecken der dreieckförmigen Teilflächen ausgerichtet angeordnet sind und die erzeugten Eckennormalen durch diese Punkte P₁, P₂, P₃, ...,Pₙ verlaufen.

In einem ersten Slicer-Schritt 3 werden die 3D-Druckdaten der Soll-Geometrie 30 der 3D-Struktur in spezifische Anweisungen für die Erzeugung einzelner Schichten im 3D-Druckverfahren umgewandelt. Nachfolgend liegen erste Schichtdaten 4 der Soll-Geometrie 30 der 3D-Struktur vor.

In einem ersten Druckschritt 5 erfolgt die Erzeugung der 3D-Struktur im 3D-Druckverfahren mittels der bereitgestellten Schichtdaten 4 in einem 3D-Drucker.

Nach Abschluss der Erzeugung der 3D-Struktur im 3D-Drucker 31 wird diese im Nachverarbeitungsschritt 6 aus dem Druckbett des 3D-Druckers entnommen und gereinigt. Dieser Nachverarbeitungsschritt 6 kann auch die Vorgänge des Aushärtens, der Nachbearbeitung und des Transports der 3D-Struktur 31 einschließen. Unter einer Nachbearbeitung wird beispielsweise ein Entfernen von Stützstrukturen und eine Reinigung der erzeugten 3D-Struktur 31 verstanden.

Die erzeugte 3D-Struktur 31 wird im Vermessungsschritt 7 dreidimensional vermessen. Dieser Messvorgang kann beispielsweise mittels einer entsprechenden Laserscan-Vorrichtung (3D-Scanvorrichtung) durchgeführt werden. Im Ergebnis einer derartigen Messung liegen dreidimensionale, in der Praxis meist unvollständige Daten 34 der Ist-Geometrie der erzeugten 3D-Struktur 31 vor. Diese Daten sind unvollständig, da Daten für ungescannte Bereiche, welche beispielsweise durch Hinterschneidungen verursacht werden, fehlen. Derartige ungescannte Bereiche 35 entstehen im Vermessungsschritt 7, wenn Teile der Oberfläche der erzeugten Ist-Struktur 31 durch die Sensoren der 3D-Scanvorrichtung nicht erreicht werden können beziehungsweise für die 3D-Scanvorrichtung "sichtbar" sind. Die Daten 34 der gescannten Ist-Geometrie 31 entsprechen dem Modell 34, mittels welchem die Daten 34 optisch dargestellt und somit veranschaulicht werden können.

Optional kann ein weiterer erster Druckschritt 5, ein weiteres Nachverarbeitungsschritt 6 und ein weiterer Vermessungsschritts 7 ablaufen, um mehr als eine 3D-Struktur 31 zu erzeugen und zu vermessen, bevor das Verfahren fortgesetzt wird.

Im Ergebnis des Vermessungsschritts 7 liegen Daten 34 der gescannten Ist-Geometrie der erzeugten 3D-Struktur 31 als Messpunktwolke 8 vor. Diese dreidimensionalen Daten der Messpunktwolke 8 werden beispielsweise zu Eckpunkten P₁, P₂, P₃, ...,Pₙ der Teilflächen zugeordnet, welche beim Vorgang der Triangulation der Oberfläche der zu erzeugenden Soll-Struktur genutzt wurden, um die Außenkonturen der zu erzeugenden 3D-Struktur zu beschreiben.

Im Projektionsschritt 9 werden die Daten der Ist-Geometrie 31 der erzeugten 3D-Struktur und die Daten der Soll-Geometrie 30 der erzeugten 3D-Struktur übereinander projiziert beziehungsweise miteinander verglichen. Somit können Abweichungen zwischen der Ist-Geometrie 31 der 3D-Struktur und der Soll-Geometrie 30 der 3D-Struktur punktweise anhand von korrespondierenden Punkten P 37 und P' 36, welche in den gescannten Bereichen liegen, bestimmt werden. Hierbei liegen die Punkte P₁, P₂, P₃, ...,Pₙ 37 jeweils auf der Oberfläche der Soll-Geometrie 30 der 3D-Struktur und die zugehörigen Punkte P₁', P₂', P₃', ..., Pₖ' 36 jeweils auf der Oberfläche der Ist-Geometrie 31 der 3D-Struktur. Hierbei gilt die Beziehung k < n was bedeutet, dass die Anzahl der bei einer Messung aufgenommenen Messpunkte, welche Punkten P' 36 auf der Ist-Geometrie 31 zugeordnet werden können, kleiner ist als die Anzahl der Punkte P 37 auf der Soll-Geometrie 30.

Diese bestimmten ersten Abweichungen 28 beziehungsweise Abweichungsdaten 28 repräsentieren somit die jeweiligen Abstände zwischen einem Punkt P 37 und dem zugehörigen Punkt P' 36 in den gescannten Bereichen. Diese Abweichungsdaten 28 werden mit ihrem ermittelten Wert zu den jeweiligen Punkten P₁, P₂, P₃, ..., Pₙ, welche auf der Oberfläche Soll-Geometrie 30 der 3D-Struktur liegen, gespeichert.

Da die im dreidimensionalen Scan erzeugten Daten 34 der gescannten Ist-Geometrie 31 der erzeugten 3D-Struktur unvollständig sind, also ungescannte Bereiche 35 aufweisen, werden im nachfolgenden Vervollständigungsschritt 10 zweite Abweichungen 29 beziehungsweise zweite Abweichungsdaten 29 für die ungescannten Bereiche 35 verfahrensgemäß erzeugt beziehungsweise interpoliert. In diesem verfahrensgemäßen Vervollständigungsschritt 10 werden die im Projektionsschritt 9 ermittelten ersten Abweichungen 28 in den gescannten Bereichen, insbesondere die festgestellten ersten Abweichungen 28 zwischen korrespondierenden Punkten P 37 und P' 36, welche an den Rändern der ungescannten Bereich 35 liegen, verwendet.

Nach dem Vervollständigungsschritt 10 liegen vollständige Abweichungsdaten vor, welche alle Abweichungsdaten 28 und 29 zwischen der zu erzeugenden 3D-Struktur 30 und der erzeugten 3D-Struktur 31, also sowohl die in den gescannten Bereichen ermittelten ersten Abweichungsdaten 28 wie auch in den ungescannten Bereichen 35 ermittelten zweiten Abweichungsdaten 29, umfassen.

Diesem Vervollständigungsschritt 10 kann sich optional ein Glättungsschritt 11 anschließen, in welchem die nun vollständigen Abweichungsdaten, also die ersten Abweichungsdaten 28 der gescannten Bereiche und die zweiten Abweichungsdaten 29 der ungescannten Bereiche, geglättet beziehungsweise nachbearbeitet werden. Hierfür wird beispielsweise eine Abweichung 28 oder 29 an einem beliebigen Punkt P mit einem gewichteten Mittelwert für diese Abweichung 28 oder 29 korrigiert.

Nachfolgend liegen geglättete vollständige Abweichungsdaten 12 vor, welche alle Differenzen beziehungsweise alle Abweichungen zwischen der Soll-Geometrie 30 der 3D-Struktur und der Ist-Geometrie 31 der 3D-Struktur für alle Bereiche der Oberfläche der Ist-Geometrie 31 der 3D-Struktur beschreiben.

Optional kann im nachfolgenden Schritt eine Erkennung 13 von deterministischen Verzügen auf der Grundlage einer Auswertung beziehungsweise Analyse mehrerer Ergebnisse mehrerer dreidimensionaler Scans mehrerer erzeugter 3D-Strukturen 31 erfolgen. Derart können beispielsweise Mittelwerte von auftretenden Abweichungen zu Punkten auf der Oberfläche der 3D-Struktur bestimmt werden.

Im Ergebnis der optionalen Erkennung 13 liegen nachfolgend entweder die im Schritt 12 bestimmten vollständigen Abweichungsdaten oder weiter korrigierte vollständige Abweichungsdaten 14 vor, welche im weiteren Verfahrensablauf genutzt werden.

Im Deformationsschritt 15 werden korrigierte 3D-Druckdaten erzeugt, welche die Deformationen beziehungsweise Abweichungen der Ist-Geometrie 31 der erzeugten 3D-Struktur gegenüber der vorgegebenen Soll-Geometrie 30 der zu erzeugenden 3D-Struktur beinhalten. Die Deformation des vorhandenen Soll-Modells der 3D-Struktur wird entgegengesetzt zu den ermittelten Abweichungen durchgeführt, um im Ergebnis der Erzeugung einer weiteren 3D-Struktur auf der Grundlage dieser korrigierten 3D-Druckdaten 38 die auftretenden deterministischen Verzüge zu beseitigen oder zumindest zu minimieren. Entgegengesetzt zu den ermittelten Abweichungen 28, 29 heißt, dass ein ermitteltes Übermaß von beispielsweise 0,2 mm an einem bestimmten Punkt P₁ 37 auf der Oberfläche der 3D-Struktur durch ein Untermaß von 0,2 mm für diesen bestimmten Punkt P₁ 37 korrigiert wird. Bei dieser Deformation werden Punkte P₁, P₂, P₃, ...,Pₙ der Daten der Soll-Geometrie 30 der 3D-Struktur in Abhängigkeit von der zum jeweiligen Punkt P₁, P₂, P₃, ...,Pₙ ermittelten Abweichung 28, 29 in einer der ermittelten Abweichung 28, 29 entgegengesetzten Richtung und mit dem Betrag der ermittelten Abweichung 28, 29 verschoben.

Die im Deformationsschritt 15 erzeugten 3D-Druckdaten liegen nachfolgend als Deformationsdaten 16 vor, welche die korrigierten 3D-Druckdaten 38 repräsentieren.

Im nachfolgenden zweiten Slicer-Schritt 17 werden die Deformationsdaten 16 beziehungsweise die korrigierten 3D-Druckdaten 38 der 3D-Struktur in spezifische Anweisungen für die Erzeugung einzelner Schichten im 3D-Druckverfahren umgewandelt. Nachfolgend liegen weitere Schichtdaten 18 zur Erzeugung einer weiteren 3D-Struktur vor.

In einem weiteren Druckschritt 19 erfolgt die Erzeugung einer weiteren 3D-Struktur im 3D-Druckverfahren mittels der bereitgestellten weiteren Schichtdaten 18 in einem 3D-Drucker.

Nach der Erzeugung einer weiteren 3D-Struktur im weiteren Druckschritt 19 kann das Verfahren erneut durchlaufen werden und wird im Vermessungsschritt 7 fortgesetzt.

Alternativ kann es im Verfahrensablauf vorgesehen sein, dass in einem alternativen Deformationsschritt 20 korrigierte 3D-Druckdaten für die einzelnen Schichten erzeugt werden, welche die Deformationen beziehungsweise Abweichungen der Ist-Geometrie 31 der erzeugten 3D-Struktur gegenüber der vorgegebenen Soll-Geometrie 30 der zu erzeugenden 3D-Struktur beinhalten.

Die geglätteten vollständigen Abweichungsdaten 12 oder die korrigierten Abweichungsdaten 14 werden genutzt, um beispielsweise aus den vorhandenen ersten Schichtdaten 4 mittels der bekannten Abweichungen 28, 29 zu den jeweiligen Schichten sogenannte Schicht-Deformationsdaten 21 zu erstellen.

Die Deformation der ersten Schichtdaten 4 wird ebenfalls entgegengesetzt zu den ermittelten Abweichungen 28, 29 durchgeführt, um im Ergebnis der Erzeugung einer weiteren 3D-Struktur auf der Grundlage dieser korrigierten 3D-Druckdaten 38 die auftretenden deterministischen Verzüge zu beseitigen oder zumindest zu minimieren.

Die Schicht-Deformationsdaten 21 werden im weiteren Verfahrensablauf in zweite Schichtdaten 18 überführt und eine weitere 3D-Struktur in einem weiteren Druckschritt 19 erzeugt.

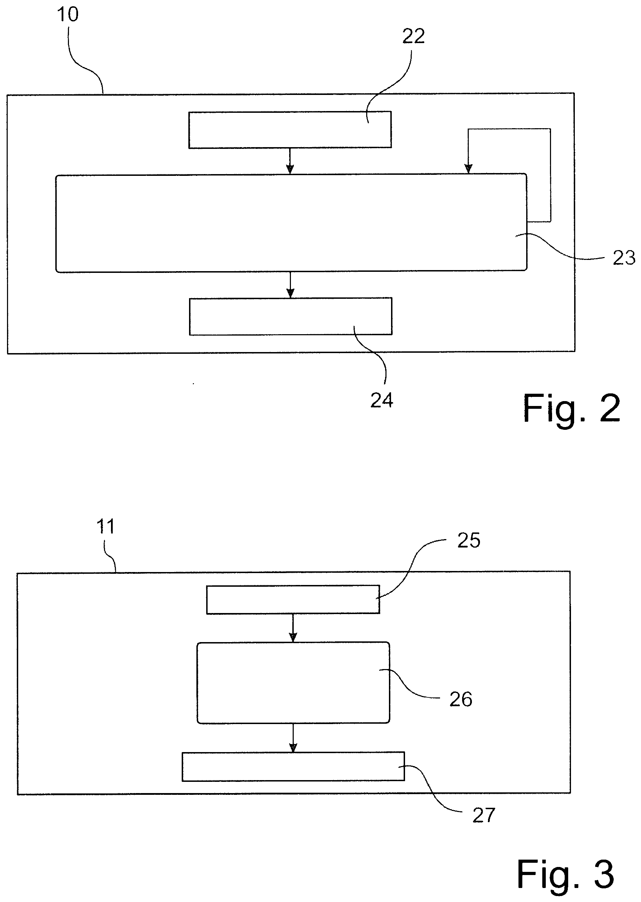

Die **Fig. 2** zeigt einen beispielhaften Ablaufplan für den Vorgang einer Vervollständigung der zu den ungescannten Bereichen 35 der Oberfläche der erzeugten 3D-Struktur 31 gehörenden fehlenden weiteren Abweichungsdaten 29 in einem Vervollständigungsschritt 10 unter Zuhilfenahme der Daten Soll-Geometrie 30 der 3D-Struktur sowie den bereits ermittelten ersten Abweichungen 28 gemäß dem vorliegenden Verfahren.

Die Eingangsdaten 22 für den Vervollständigungsschritt 10 sind Daten der Oberfläche der Soll-Geometrie 30 der 3D-Struktur, welche bereits im Umwandlungsschritt 2 derart verarbeitet wurden, dass die Oberfläche der Soll-Geometrie 30 der 3D-Struktur mittels kleiner Teilflächen, wie beispielsweise Dreiecken, nachgebildet beziehungsweise trianguliert worden ist, wobei den Ecken der Dreiecke Punkte P₁, P₂, P₃, ...,Pₙ zugeordnet wurden. Zu den Eingangsdaten 22 gehören auch die im Projektionsschritt 9 bereits ermittelten ersten Abweichungswerte beziehungsweise ersten Abweichungsdaten 28 für die gescannten Bereiche.

Ausgehend von den bereits ermittelten ersten Abweichungsdaten 28 für die gescannten Bereiche, insbesondere den ermittelten Abweichungsdaten 28 zu Punkten P₁, P₂, P₃, ...,Pₙ 37 an den Rändern der ungescannten Bereiche 35, erfolgt eine Interpolation 23, bei welcher schrittweise weitere Abweichungsdaten 29 zu Punkten P₁, P₂, P₃, ...,Pₙ 37 bestimmt werden, welche in einem ungescannten Bereich 35 liegen. Dieser Vorgang der Interpolation 23 nutzt beispielsweise die zu zwei Punkten P₁ 37 und P₂ 37, welche im gescannten Bereich liegen, einer dreieckförmigen Teilfläche bekannten ersten Abweichungsdaten 28 zur Ermittlung eines weiteren Abweichungswerts 29 zum Punkt P₃ 37, welcher im ungescannten Bereich 35 liegt. In diesem Beispiel kann ein weiterer Abweichungswert für den Punkt P₃ 37 derart bestimmt werden, dass ein arithmetischer Mittelwert aus den zu den Punkten P₃ 37 und P₂ 37 bekannten ersten Abweichungen 28 im Schritt der Interpolation 23 bestimmt wird.

Diese Interpolation 23 wird beispielsweise für benachbarte dreieckförmige Teilflächen mit ihren Punkten P₁, P₂, P₃, ...,Pₙ 37 entlang des Randes des ungescannten Bereichs 35 fortgesetzt, bis beispielsweise zu allen nahe dem Rand des ungescannten Bereichs 35 in einer ersten Reihe liegenden Punkten P₁, P₂, P₃, ...,Pₙ 37 die zugehörigen weiteren Abweichungswerte 29 bestimmt worden sind. Auch die derart ermittelten weiteren Abweichungswerte beziehungsweise weiteren Abweichungsdaten 29 werden zu zugehörigen Punkten P₁, P₂, P₃, ...,Pₙ 37 der Daten der Soll-Geometrie 30 der 3D-Struktur mit ihrem Betrag gespeichert.

Nachfolgend kann die Interpolation 23 für Punkte P₁, P₂, P₃, ...,Pₙ 37 in einer gedachten zweiten Reihe erfolgen, welche eine größere Entfernung zum Rand des ungescannten Bereichs 35 aufweisen und so weiter. Mittels dieser Interpolation 23 erfolgt eine Vervollständigung der weiteren Abweichungsdaten 29 zu Punkten P₁, P₂, P₃, ...,Pₙ 37 in den ungescannten Bereichen 35 von außen nach innen, solange bis zu allen im ungescannten Bereich 35 liegenden Punkten P₁, P₂, P₃, ...,Pₙ 37 entsprechende weitere Abweichungsdaten 29 erzeugt worden sind.

Die derart erzeugten weiteren Abweichungsdaten 29 zu Punkten P₁, P₂, P₃, ...,Pₙ 37 in den ungespannten Bereichen 35 sind die Ausgangsdaten 24 des Vervollständigungsschritts 10.

Die Fig. 3 zeigt einen beispielhaften Ablauf für den Glättungsschritt 11. Bei der Bestimmung von Abweichungen 28 in den gescannten Bereichen oder bei der Bestimmung von weiteren Abweichungen 29 in den ungescannten Bereichen 35 oder an den Übergängen zwischen einem gescannten Bereich und einem ungescannten Bereich 35 kann es zu sprungartigen Veränderungen von Werten der Abweichungsdaten 28, 29 für benachbarte Punkte P kommen.

Die dem optionalen Glättungsschritt 11 zur Verfügung stehenden Glättungseingangsdaten 25 sind die nach dem Vervollständigungsschritt 10 vorliegenden vollständigen Abweichungsdaten für Punkte P₁, P₂, P₃, ...,Pₙ 37 in den gescannten und den ungescannten Bereichen 35 der Oberfläche der Soll-Geometrie 30 der 3D-Struktur.

Bei diesem Glättungsschritt 11 werden die ansonsten bei einem nachfolgenden Deformationsschritt 15 auftretenden Stufungen verringert, indem derartige sprunghafte Abweichung zwischen Werten benachbarter Abweichungsdaten 28, 29 dadurch verringert werden, dass die zu den entsprechenden Punkten P₁, P₂, P₃, ...,Pₙ 37 ermittelten Abweichungswerte 28, 29 jeweils mittels gewichteter Mittelwertbildung 26 für den entsprechenden Abweichungswert korrigiert werden.

Hierfür wird beispielsweise ein gewichteter Mittelwert für einen Punkt P₁ 37 dadurch bestimmt, dass bei der gewichteten Mittelwertbildung 26 für den Punkt P₁ 37 der Abweichungswert 28 oder 29 für den Punkt P₁ 37 selbst und mehrere Abweichungswerte 28, 29 für die den Punkt P₁ 37 unmittelbar umgebenden, benachbarten Punkte P₂, P₃, P₄, ..., Pₙ verarbeitet werden. Bei einer Verwendung von dreieckförmigen Teilflächen werden somit mindestens die Abweichungswerte 28, 29 von drei benachbarten Punkten P₂, P₃ und P₄ und der Abweichungswert des Punktes P₁ 37 selbst bei der gewichteten Mittelwertbildung 26 genutzt.

Dieser Glättungsschritt 11 wird für eine festgelegte Anzahl von Punkten P₁, P₂, P₃, ...,Pₙ 37 für festgelegte Punkte P₁, P₂, P₃, ...,Pₙ 37 für festgelegte Bereiche oder für alle Punkte P₁, P₂, P₃, ...,Pₙ 37 auf der Oberfläche der Soll-Geometrie 30 der 3D-Struktur durchgeführt. Im Ergebnis dieses Glättungsschritts 11 sind geglättete beziehungsweise korrigierte Abweichungswerte zu Punkten P₁, P₂, P₃, ...,Pₙ 37 erzeugt worden, welche die Glättungsausgangsdaten 27 sind. Diese Glättungsausgangsdaten 27 werden im Verfahrensablauf in die geglätteten vollständigen Abweichungsdaten 12 überführt.

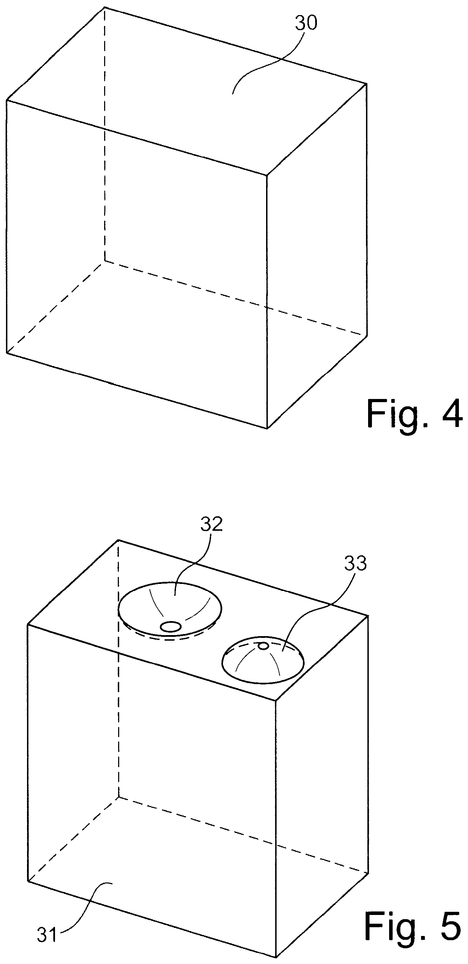

Die **Fig. 4** zeigt eine mittels des 3D-Druckverfahrens zu erzeugende 3D-Struktur 30, also eine Soll-Geometrie 30 der zu erzeugenden 3D-Struktur. Zu dieser Soll-Geometrie 30 der 3D-Struktur liegen Daten der Soll-Geometrie 30 der 3D-Struktur vor, welche beispielsweise in einem ersten Slicer-Schritt 3 in spezifische Anweisungen für die Erzeugung einzelner Schichten im 3D-Druckverfahren, also erste Schichtdaten 4 der Soll-Geometrie 30 der 3D-Struktur, umgewandelt werden.

In einem nachfolgenden ersten Druckschritt 5 erfolgt die Erzeugung der 3D-Struktur im 3D-Druckverfahren mittels der bereitgestellten Schichtdaten 4 in einem 3D-Drucker. Zum besseren Verständnis werden zur Fig. 4 sowie den nachfolgenden Figuren die Verfahrensschritte aus der Fig. 1 mit ihren Bezugsziffern benannt, obwohl diese Verfahrensschritte aus der Fig. 1 in der Fig. 4 sowie den nachfolgenden Figuren nicht dargestellt sind.

Die **Fig. 5** zeigt eine mittels des 3D-Druckverfahrens erzeugte 3D-Struktur 31, also eine Ist-Geometrie 31 der 3D-Struktur, beispielsweise nach dem ersten Druckschritt 5, dem Aushärten und nach dem Nachverarbeitungsschritt 6. Diese erzeugte 3D-Struktur 31 entspricht den Daten der Ist-Geometrie 31 der 3D-Struktur. Als 3D-Struktur wurde zur Vereinfachung der Darstellungen ein quaderförmiger Körper gewählt. In der Praxis sind derartige 3D-Strukturen 31 anders gestaltet. Auch wenn bei einem derartigen quaderförmigen Körper ungescannte Bereiche beim 3D-Scan des Körpers nicht auftreten, wird dies hier beispielhaft angenommen, um das vorliegende Verfahren in einer anschaulichen Weise zu erläutern.

Die in der Fig. 5 dargestellte erzeugte 3D-Struktur 31 weist beispielhaft zwei Abweichungen 32, 33 von der vorgegebenen Soll-Geometrie 30 auf. Im Beispiel sind diese Abweichungen eine konkave Abweichung 32 und eine konvexe Abweichung 33, welche an einer Fläche der erzeugten 3D-Struktur 31 dargestellt sind.

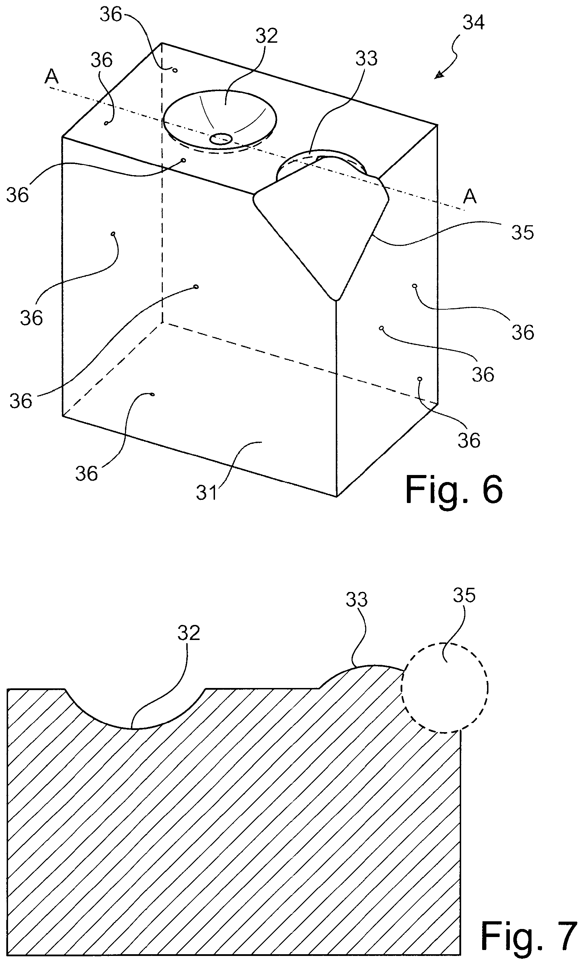

Die in der Fig. 5 dargestellte erzeugte 3D-Struktur 31 wird beispielsweise im Vermessungsschritt 7 dreidimensional vermessen. Ein Modell 34 der in diesem Vermessungsschritt 7 bereitgestellten Daten 34 der gescannten Ist-Geometrie 31 der 3D-Struktur ist in der Fig. 6 dargestellt. Dieses Modell 34 besteht aus der Messpunktwolke 8 beziehungsweise Daten zu Punkten P'₁, P'₂, P'₃, ..., P'ₖ 36, welche die Ist-Geometrie 31 der 3D-Struktur abbilden. In der Darstellung der Fig. 6 sind nur einige wenige Punkte P'₁, P'₂, P'₃, ..., P'ₖ 36 auf der Ist-Geometrie 31 der 3D-Struktur beispielhaft dargestellt.

Beispielhaft ist in der Darstellung der Fig. 6 ein ungescannter Bereich 35 dargestellt. In diesem ungescannten Bereich 35 wurden im Vermessungsschritt 7 keine dreidimensionalen Daten zu Punkten P'₁, P'₂, P'₃, ..., P'ₖ 36 auf der Oberfläche der erzeugten 3D-Struktur 31 ermittelt, beispielsweise weil ein derartiger Bereich 35 für die Sensoren der 3D-Scanvorrichtung nicht "sichtbar" war.

Die **Fig. 7** zeigt eine Schnittdarstellung durch das in der Fig. 6 dargestellte Modell 34 beziehungsweise die Daten der gescannten Ist-Geometrie 34 entlang einer Schnittlinie AA. Die Fig. 7 zeigt, dass in dem ungescannten Bereich 35 keine Daten zum Verlauf der Oberfläche beziehungsweise Außenkontur des Modells 34 vorhanden sind. In der Fig. 7 sind die konkave Abweichung 32 vollständig und die konvexe Abweichung 33 zumindest teilweise dargestellt.

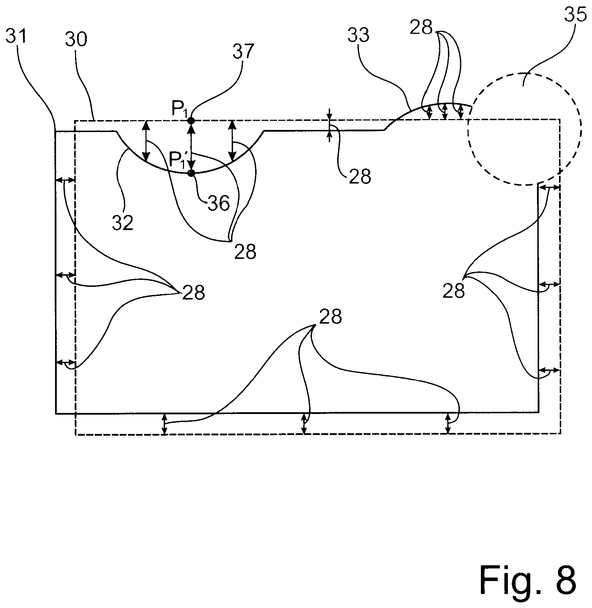

Die **Fig. 8** visualisiert den Projektionsschritt 9, in welchem die Daten der Ist-Geometrie 31 der erzeugten 3D-Struktur und die Daten der Soll-Geometrie 30 der zu erzeugenden 3D-Struktur übereinander projiziert beziehungsweise miteinander verglichen werden. Im Projektionsschritt 9 werden erste Abweichungen 28 zwischen der Ist-Geometrie 31 der 3D-Struktur und der Soll-Geometrie 30 der 3D-Struktur an korrespondierenden Punkten bestimmt. Die Daten der Soll-Geometrie 30 sind mittels einer Strich-Strich-Linie dargestellt, während die Daten der Ist-Geometrie 31 mittels einer durchgehenden Linie dargestellt sind. Außerdem zeigt die Fig. 8 beispielhaft einen ungescannten Bereich 35.

Im Projektionsschritt 9 werden die ersten Abweichungen 28 zwischen korrespondierenden Punkten P 37 und P' 36, welche in den gescannten Bereichen 35 liegen, bestimmt. Hierbei liegen die Punkte P₁, P₂, P₃, ...,Pₙ 37 jeweils auf der Oberfläche der Soll-Geometrie 30 der 3D-Struktur und die zugehörigen Punkte P'₁, P'₂, P'₃, ..., P'ₖ 36 jeweils auf der Oberfläche der Ist-Geometrie 31 der 3D-Struktur. Dies ist in der Fig. 8 an einer ersten Abweichung 28 zwischen dem Punkt P₁ 37 und dem Punkt P'₁ 36 beispielhaft dargestellt, welche im Bereich der konkaven Abweichung 32 liegt.

Das durch das vorliegende Verfahren auch zu lösende Problem besteht darin, dass in den ungescannten Bereichen 35 keine ersten Abweichungen 28 zwischen korrespondierenden Punkten P 37 und P' 36 ermittelt werden können.

Die bestimmten ersten Abweichungen 28 beziehungsweise Abweichungsdaten 28 repräsentieren nur die jeweiligen Abstände zwischen beispielsweise einem Punkt P₁ 37 und dem zugehörigen Punkt P'₁ 36 in den gescannten Bereichen. Die ermittelten ersten Abweichungen 28 werden mit ihrem ermittelten Wert zu den jeweiligen Punkten P₁, P₂, P₃, ...,Pₙ 37, welche auf der Oberfläche Soll-Geometrie 30 der 3D-Struktur liegen, gespeichert.

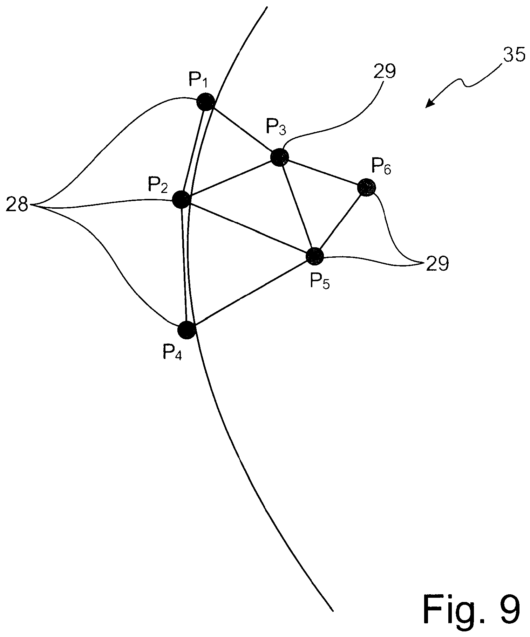

Die **Fig. 9** zeigt eine beispielhafte Ermittlung von weiteren Abweichungen 29 für die ungescannten Bereiche 35.

Die Fig. 9 zeigt einen Ausschnitt eines Übergangs eines gescannten Bereichs zu einem ungescannten Bereich 35 in einer Zoomdarstellung.

Eine Voraussetzung für die Ermittlung weiteren Abweichungen 29 ist es, dass die Oberfläche des Soll-Bauteils bereits in einer triangulierten Form vorliegt. Wie zum Umwandlungsschritt 2 beschrieben, wurde die Oberfläche der Soll-Geometrie 30 der zu erzeugenden 3D-Struktur vollständig beispielsweise mittels dreieckförmiger Teilflächen überdeckt. Somit liegen Daten zu Nachbarschaftsbeziehungen von Punkten P₁, P₂, P₃, ...,Pₙ 37 an den Ecken der dreieckförmiger Teilflächen vor, welche nachfolgend genutzt werden.

Es werden dreieckförmige Teilflächen beziehungsweise Dreiecke auf der Oberfläche der Soll-Geometrie 30 bestimmt, welche am Rand des ungescannten Bereichs 35 liegen und bei welchen an zwei Ecken bereits erste Abweichungsdaten 28 im Projektionsschritt 9 bestimmt wurden. Im Beispiel der Fig. 9 ist das die erste dreieckförmige Teilfläche mit den Eckpunkten P₁, P₂, P₃, zu welcher erste Abweichungen 28 zu den Eckpunkten P₁ und P₂ bekannt sind, da hier zwei erste Abweichungen 28 zwischen korrespondierenden Punkten P₁ 37 und P'₁ 36 sowie P₂ 37 und P'₂ 36 ermittelt werden konnten. Eine Ermittlung von Abweichungen zwischen korrespondierenden Punkten P 37 und P' 36 ist in den ungescannten Bereichen 35 jedoch nicht möglich, da in diesen Bereichen 35 Daten zu den Punkten P' 36 fehlen.

Bei der Bestimmung beziehungsweise Ermittlung weiterer Abweichungen 29 wird davon ausgegangen, dass sich die Werte der ersten Abweichungen 28 an den Rändern des ungescannten Bereichs 35 in die ungescannten Bereich hinein mit vergleichbaren Werten für die weiteren Abweichungen 29 fortsetzen. Im Beispiel kann die weitere Abweichung 29 für den Eckpunkt P₃ der ersten dreieckförmigen Teilfläche derart bestimmt werden, dass ein arithmetischer Mittelwert aus den zu den Punkten P₁ und P₂ bekannten ersten Abweichungen 28 ermittelt wird. Die ermittelten ersten und weiteren Abweichungen 28 und 29 für die Punkte P₁, P₂ und P₃ weisen einen Wert für die Abweichung auf, wobei sich die Richtungen der Abweichungen 28 und 29 jeweils entlang der zum Punkt P₁, P₂ oder P₃ zugehörigen Eckennormalen erstecken, welche in der Darstellung der Fig. 9 nicht gezeigt sind.

Die Ermittlung einer weiteren Abweichung 29 beispielsweise für den Eckpunkt P₃ mittels einer arithmetischen Mittelwertbildung aus den zu den Punkten P₁ und P₂ bekannten ersten Abweichungen 28 ist beispielhaft. In der Praxis können außer einer Mittelwertbildung andere Berechnungsvorschriften hinterlegt werden, welche beispielsweise komplexere, mehrere Punkte P umfassende Teilflächenkonstellationen, Prioritätengewichtungen bei stark differierenden ersten Abweichungen oder den Grad an Unsicherheit einer bestimmten weiteren Abweichung aufgrund der Entfernung zu einer ermittelten ersten Abweichung berücksichtigen.

Nach der Ermittlung der weiteren Abweichung 29 für den Eckpunkt P₃ wird beispielsweise eine weitere dreieckförmige Teilfläche auf der Oberfläche der Soll-Geometrie 30 bestimmt, welche am Rand des ungescannten Bereichs 35 liegt und bei welcher an zwei Ecken bereits erste Abweichungsdaten 28 im Projektionsschritt 9 bestimmt wurden. Im Beispiel der Fig. 9 ist das die zweite dreieckförmige Teilfläche mit den Eckpunkten P₂, P₄, P₅, zu welchen erste Abweichungen 28 zu den Eckpunkten P₂ und P₄ bekannt sind, da hier zwei erste Abweichungen 28 zwischen den korrespondierenden Punkten P₂ 37 und P'₂ 36 sowie P₄ 37 und P'₄ 36 ermittelt werden konnten. Die Ermittlung der weiteren Abweichung 29 für den Eckpunkt P₅ der zweiten dreieckförmigen Teilfläche erfolgt wieder beispielhaft mittels einer arithmetischen Mittelwertbildung aus den zu den Punkten P₂ und P₄ bekannten ersten Abweichungen 28.

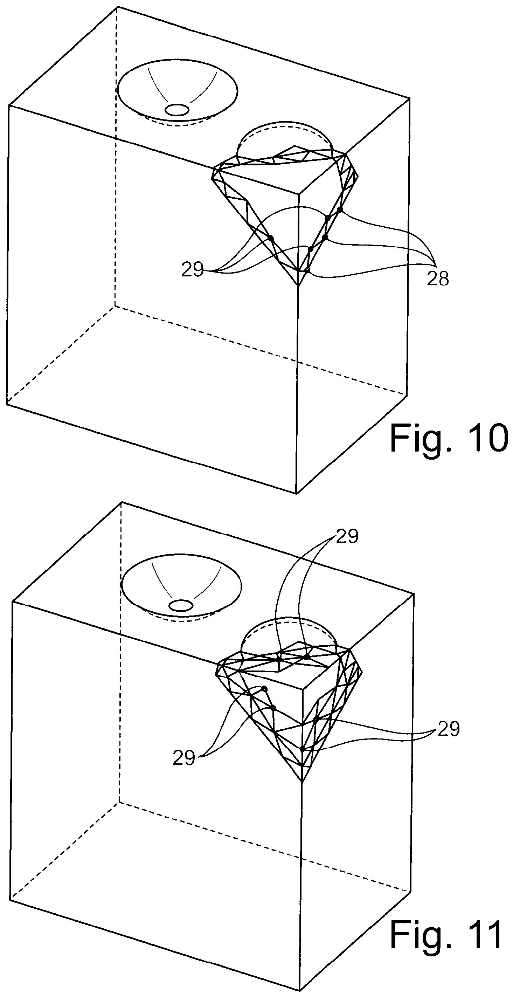

Eine derartige Ermittlung von weiteren Abweichungen 29 für entsprechende Eckpunkte P₆, P₇, P₈, ..., Pₙ von weiteren dreieckförmigen Teilflächen kann beispielsweise entlang des Randes des ungescannten Bereichs 35 fortgesetzt werden, bis entlang des gesamten Randbereichrs eine gedachte erste Reihe von angenommenen dreieckförmigen Teilflächen entstanden ist. Dieser Vorgang der Ermittlung von weiteren Abweichungen 29 auf der Grundlage bekannter erster Abweichungen 28 für entsprechende Eckpunkte beziehungsweise Punkte P 37 auf der Oberfläche der Soll-Geometrie 30 der zu erzeugenden 3D-Struktur ist in der **Fig. 10** beispielhaft dargestellt. Die in der Darstellung der Fig. 10 gezeigten dreieckförmigen Teilflächen sind zur Veranschaulichung in einer Darstellung mit dem Model 34 dargestellt, um den iterativen Vorgang der Ermittlung von weiteren Abweichungen 29 zu visualisieren. Wie bereits beschrieben, sind die dreieckförmigen Teilflächen die bei der Triangulation der Oberfläche der Soll-Geometrie 30 erzeugten dreieckförmigen Teilflächen.

Wurde beispielsweise eine erste Reihe von weiteren Abweichungen 29 nahe dem Rand des ungescannten Bereich 35 ermittelt, kann die Ermittlung weiterer Abweichungen 29 in einem Bereich fortgesetzt werden, welcher weiter vom Rand des ungescannten Bereichs 35 entfernt ist, beispielsweise in einer zweiten Reihe.

Diese Fortsetzung der Ermittlung weiterer Abweichungen 29 wird mittels der in der Fig. 9 dargestellten dritten dreieckförmigen Teilfläche mit den Eckpunkten P₃, P₅, P₆ beschrieben. In dieser dritten dreieckförmigen Teilfläche sind weitere Abweichungen 29 zu den Eckpunkten P₃ und P₅, wie oben beschrieben wurde, ermittelt. Somit kann eine Ermittlung der weiteren Abweichung 29 zum Eckpunkt P₆I in der oben beschriebenen Weise erfolgen.

Diese Fortsetzung der Ermittlung weiterer Abweichungen 29 in einer weiteren gedachten Reihe, wobei diese weitere Reihe weiter vom Rand des ungescannten Bereichs 35 beabstandet ist als die erste Reihe, ist in der **Fig. 11** beispielhaft dargestellt. Die in der Darstellung der Fig. 11 gezeigten dreieckförmigen Teilflächen sind zur Veranschaulichung in einer Darstellung mit dem Modell 34 dargestellt, um den iterativen Vorgang der Ermittlung von weiteren Abweichungen 29 in einer weiteren Reihe zu visualisieren.

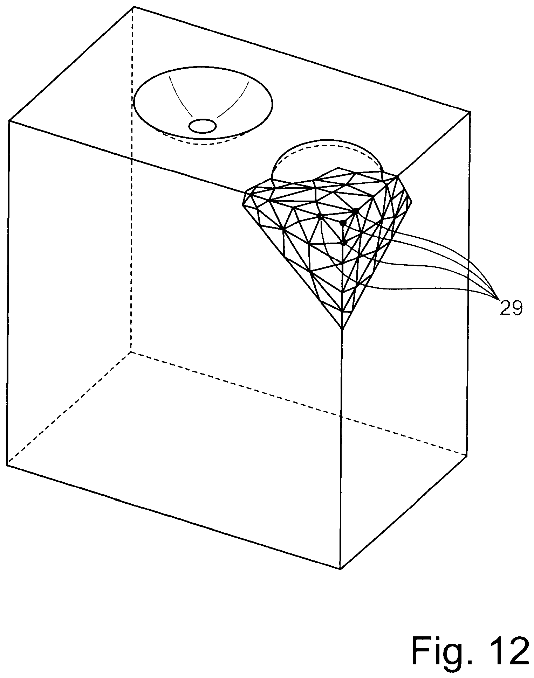

Der Vorgang der Ermittlung weiterer Abweichungen 29 im ungescannten Bereich 35 wird derart iterativ fortgesetzt, bis weitere Abweichungen 29 beispielsweise für den gesamten ungescannten Bereich 35 erzeugt worden sind, wie es beispielhaft in der **Fig. 12** visualisiert ist.

Wie es in den Fig. 11 und 12 zu erkennen ist, erfolgt die verfahrensgemäße Ermittlung von weiteren Abweichungen 29 unabhängig vom Oberflächenverlauf der erzeugten 3D-Struktur 31, was einen besonderen Vorteil des Verfahrens darstellt.

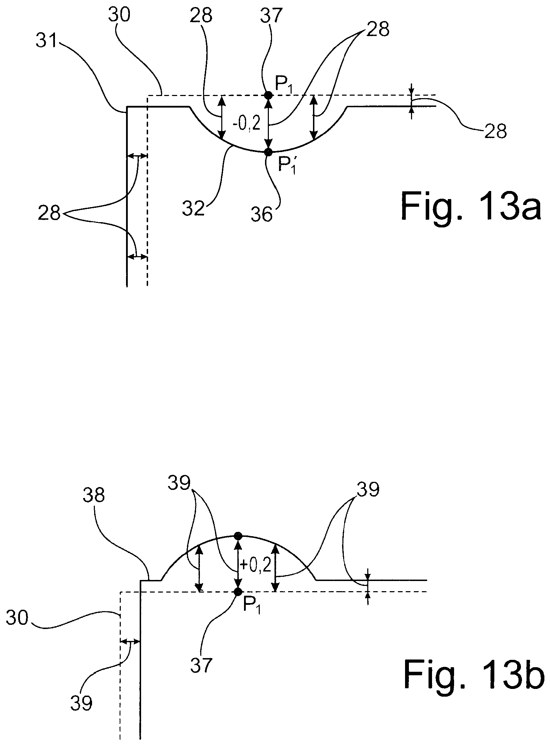

In den **Fig. 13a** und **13b** ist der im Deformationsschritt 15 ablaufende Vorgang der Deformation und der Erzeugung der korrigierten 3D-Druckdaten zur Veranschaulichung mittels zweier auszugsweiser Abbildungen dargestellt.

In der Fig. 13a ist ein Auszug aus der Fig. 8 wiedergegeben, zu welchem bereits erläutert wurde, dass Abweichungen zwischen der Ist-Geometrie 31 der 3D-Struktur und der Soll-Geometrie 30 der 3D-Struktur an korrespondierenden Punkten bestimmt werden, wobei diese ersten Abweichungen 28 zwischen korrespondierenden Punkten P₁, P₂, P₃, ...,Pₙ 37 und P'₁, P'₂, P'₃, ..., P'ₖ 36 bestimmt werden.

Dies ist beispielhaft in der Darstellung der Fig. 13a an einer ersten Abweichung 28 beispielhaft zwischen dem Punkt P₁ 37 und Punkt P'₁ 36 dargestellt, welche im Bereich der konkaven Abweichung 32 liegt. Die bestimmten ersten Abweichungen 28 beziehungsweise Abweichungsdaten 28 repräsentieren nur die jeweiligen Abstände zwischen einem Punkt P 37 und dem zugehörigen Punkt P' 36 in den gescannten Bereichen und werden mit ihrem ermittelten Wert zu den jeweiligen Punkten P₁, P₂, P₃, ...,Pₙ 37, welche auf der Oberfläche Soll-Geometrie 30 der 3D-Struktur liegen, gespeichert.

Im Vorgang der Deformation, welcher in der Fig. 13b gezeigt ist, werden die Punkte P₁, P₂, P₃, ...,Pₙ in der entgegengesetzten Richtung zur ermittelten Abweichung 28 oder 29 und um einen von der Abweichung 28 oder 29 abhängigen Betrag des gespeicherten Werts der Abweichung 28 oder 29 verschoben. In diesem Beispiel der Fig. 13 hatte die ermittelte erste Abweichung 28 beispielsweise den Wert -0,2 mm und war in die 3D-Struktur hinein gerichtet, was einem Untermaß von 0,2 mm entspricht.

Der Punkt P₁ wird im Beispiel somit zur Erzeugung der korrigierten 3D-Druckdaten 38 entgegengesetzt, von der 3D-Struktur weg, und um den Betrag des für diese erste Abweichung 28 ermittelten Betrages von 0,2 mm von der Oberfläche der Soll-Geometrie 30 der 3D-Struktur nach außen verschoben, wie es in der Fig. 13b beispielhaft mit den die Deformation abbildenden Doppelpfeilen 39 dargestellt ist.

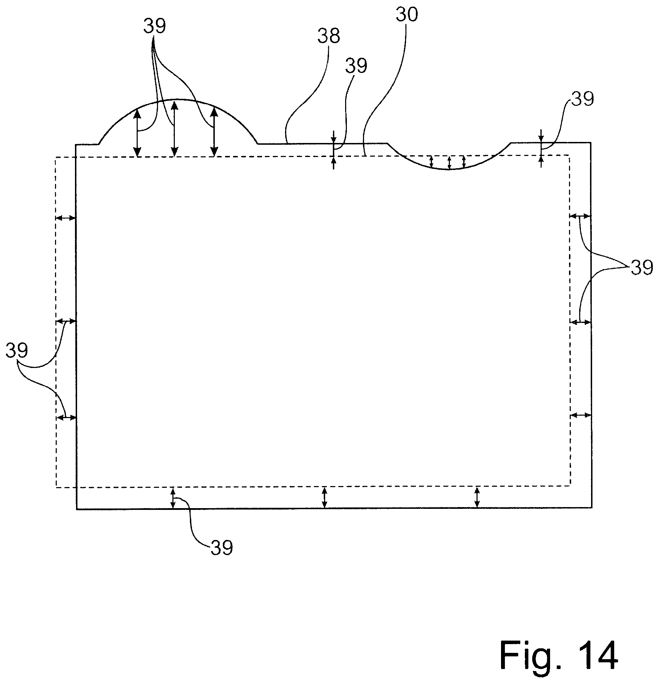

Die **Fig. 14** zeigt eine Darstellung einer beispielhaften vollständigen Deformation beziehungsweise vollständigen Erzeugung der korrigierten 3D-Druckdaten 38, welche sich von den ursprünglichen Daten der Soll-Geometrie 30 unterscheiden, um derart beim Druck einer weiteren 3D-Struktur mit den korrigierten 3D-Druckdaten 38 deterministische Verzüge zu vermindern beziehungsweise zu beseitigen.

Diese Deformation und die Erzeugung der korrigierten 3D-Druckdaten 38 erfolgt in den gescannten Bereichen mittels der ersten Abweichungen 28 und in den ungescannten Bereichen 35 mittels der ermittelten weiteren Abweichungen 29. Derart kann die Deformation über die gesamte Oberfläche der Soll-Geometrie 30 der 3D-Struktur erfolgen. Der Vorgang der Deformation ist auch in der Fig. 14 mittels der Doppelpfeile 39 beispielhaft dargestellt.

In einer ersten Alternative kann bei dieser Deformation nur ein Teil des für die Abweichungen ermittelten Werts genutzt werden, beispielsweise 50 %, 75 % oder 90 % des Werts einer Abweichung zu einem Punkt P 37.

In einer zweiten Alternative kann bei dieser Deformation der ermittelte Wert der Abweichung mit einem Faktor multipliziert werden und derart eine Deformation von beispielsweise 110 %, 125 % oder 150 % des ermittelten Betrags einer ersten oder weiteren Abweichung zu einem Punkt P 37 vorgenommen werden.

### LISTE DER BEZUGSZEICHEN

- 1: Bereitstellungsschritt
- 2: Umwandlungsschritt
- 3: erster Slicer-Schritt
- 4: erste Schichtdaten
- 5: erster Druckschritt
- 6: Nachverarbeitungsschritt
- 7: Vermessungsschritt
- 8: Messpunktwolke
- 9: Projektionsschritt
- 10: Vervollständigungsschritt
- 11: Glättungsschritt
- 12: geglättete vollständige Abweichungsdaten
- 13: Erkennung
- 14: korrigierte vollständige Abweichungsdaten
- 15: Deformationsschritt
- 16: Deformationsdaten
- 17: zweiter Slicer-Schritt
- 18: zweite Schichtdaten
- 19: weiterer Druckschritt
- 20: alternativer Deformationsschritt
- 21: Schicht-Deformationsdaten
- 22: Eingangsdaten
- 23: Interpolation
- 24: Ausgangsdaten
- 25: Glättungseingangsdaten
- 26: gewichtete Mittelwertbildung
- 27: Glättungsausgangsdaten
- 28: erste Abweichungen / erste Abweichungsdaten
- 29: weitere Abweichungen / zweite Abweichungsdaten
- 30: zu erzeugende 3D-Struktur / Soll-Geometrie der 3D-Struktur
- 31: erzeugte 3D-Struktur / Ist-Geometrie der 3D-Struktur
- 32: konkave Abweichung
- 33: konvexe Abweichung
- 34: Daten der gescannten Ist-Geometrie / Modell
- 35: ungescannter Bereich
- 36: Punkt auf Ist-Geometrie der 3D-Struktur / P'
- 37: Punkt auf Soll-Geometrie der 3D-Struktur / P
- 38: korrigierte 3D-Druckdaten
- 39: Doppelpfeil/Deformation

## Patentansprüche

1. Verfahren zur Herstellung einer 3D-Struktur in einem 3D-Druckverfahren, bei welchem für eine zu erzeugende 3D-Struktur (30) aus 3D-Druckdaten, welche Daten einer Soll-Geometrie (30) der 3D-Struktur sind, erste Schichtdaten (4) für die einzelnen Schichten der zu erzeugenden 3D-Struktur (30) bereitgestellt werden, mit welchen die Erzeugung der 3D-Struktur in einem 3D-Druckverfahren gesteuert wird,
• wobei eine erzeugte 3D-Struktur (31) dreidimensional vermessen wird, wobei in der Praxis unvollständige dreidimensionale Daten einer gescannten Ist-Geometrie (31) der 3D-Struktur einer Oberfläche der erzeugten 3D-Struktur (31) erzeugt werden, welche in einem Modell (34) abgebildet werden und einen oder mehrere ungescannte Bereiche (35) aufweist,
• wobei in einem Projektionsschritt (9) erste Abweichungen (28) zwischen korrespondierenden Punkten P (37) und P' (36) in den gescannten Bereichen bestimmt werden, wobei der Punkt P (37) jeweils auf einer Oberfläche der Soll-Geometrie (30) der 3D-Struktur und der zugehörige Punkt P' (36) jeweils auf dem Modell (34) der Oberfläche der gescannten Ist-Geometrie (31) der 3D-Struktur liegt,
• wobei diese ermittelten ersten Abweichungen (28) als Abweichungsdaten zu zugehörigen Punkten P₁, P₂, P₃, ...,Pₙ (37) der Daten der Soll-Geometrie (30) der 3D-Struktur mit ihrem Wert gespeichert werden,
• wobei in einem Vervollständigungsschritt (10) eine Vervollständigung der zu den ungescannten Bereichen (35) der Oberfläche der erzeugten 3D-Struktur (31) gehörenden weiteren Abweichungen (29) unter Zuhilfenahme der Daten der Soll-Geometrie (30) der 3D-Struktur sowie den bereits ermittelten ersten Abweichungsdaten (28) erfolgt und dass die erzeugten weiteren Abweichungsdaten (29) zu zugehörigen Punkten P₁, P₂, P₃, ...,Pₙ (37) der Daten der Soll-Geometrie (30) der 3D-Struktur mit ihrem Wert gespeichert werden und dass derart vollständige Abweichungsdaten erzeugt sind,
• wobei korrigierte 3D-Druckdaten (38) in einem Deformationsschritt (15) erzeugt werden, bei welchem Punkte P₁, P₂, P₃, ...,Pₙ (37) der Daten der Soll-Geometrie (30) der 3D-Struktur in Abhängigkeit von der zum jeweiligen Punkt P₁, P₂, P₃, ...,Pₙ (37) ermittelten und gespeicherten ersten oder weiteren Abweichung (28, 29) in einer der ermittelten ersten oder weiteren Abweichung (28, 29) entgegengesetzten Richtung um einen von der ersten oder weiteren Abweichung (28, 29) abhängigen Betrag des gespeicherten Werts verschoben werden,und
• wobei mittels dieser korrigierten 3D-Druckdaten (38) die Erzeugung nachfolgender 3D-Strukturen in einem 3D-Druckverfahren gesteuert wird.

2. Verfahren nach Anspruch 1, **dadurch gekennzeichnet, dass** ungescannte Bereiche (35) Bereiche der Oberfläche der erzeugten 3D-Struktur (31) sind, zu welchen keine Daten im Modell (34) bei der dreidimensionalen Vermessung erzeugt werden konnten.

3. Verfahren nach einem der Ansprüche 1 oder 2, **dadurch gekennzeichnet, dass** in einem Umwandlungsschritt (2) die Oberfläche der Soll-Geometrie (30) der zu erzeugenden 3D-Struktur mittels mehrerer, jeweils mehrere Ecken aufweisenden Teilflächen nachgebildet, das heißt trianguliert wird, wobei den Ecken der Teilflächen Punkte P₁, P₂, P₃, ...,Pₙ (37) zugeordnet werden.

4. Verfahren nach einem der Ansprüche 1 bis 3, **dadurch gekennzeichnet, dass** im Vervollständigungsschritt (10) weitere Abweichungen (29) zu Punkten P₁, P₂, P₃, ...,Pₙ (37) in einem ersten Schritt ermittelt werden, indem mittels einer Funktion aus mehreren ermittelten ersten Abweichungen (28) zu Punkten P₁, P₂, P₃, ...,Pₙ (37) an den Rändern der ungescannten Bereiche (35) eine weitere Abweichung (29) zu einem Punkt P₁, P₂, P₃, ...,Pₙ (37) im ungescannten Bereich (35) erzeugt wird und dass in einem nachfolgenden Schritt mittels der Funktion aus mehreren ermittelten ersten Abweichungen (28) oder weiteren Abweichungen (29) zu Punkten P₁, P₂, P₃, ...,Pₙ (37) eine Ermittlung einer weiteren Abweichung (29) zu einem Punkt P₁, P₂, P₃, ...,Pₙ (37) im ungescannten Bereich (35) erfolgt.

5. Verfahren nach Anspruch 4, **dadurch gekennzeichnet, dass** eine Funktion eine arithmetische Mittelwertbildung, eine flächengewichtende Mittelwertbildung, eine winkelgewichtende Mittelwertbildung oder eine abstandsgewichtende Mittelwertbildung ist.

6. Verfahren nach einem der Ansprüche 1 bis 5, **dadurch gekennzeichnet, dass** die Ermittlung weiterer Abweichungen (29) zu Punkten P₁, P₂, P₃, ...,Pₙ (37) im ungescannten Bereich (35) am Rand des ungescannten Bereichs (35) beginnt und in Richtung eines angenommenen Zentrums des ungescannten Bereichs (35) fortgesetzt wird.

7. Verfahren nach einem der Ansprüche 1 bis 6, **dadurch gekennzeichnet, dass** im Deformationsschritt (15) eine Verschiebung von Punkten P₁, P₂, P₃, ...,Pₙ (37) jeweils entlang einer durch den jeweiligen Punkt P₁, P₂, P₃, ...,Pₙ (37) verlaufenden Eckennormalen erfolgt.

8. Verfahren nach einem der Ansprüche 1 bis 7, **dadurch gekennzeichnet, dass** nach der Erzeugung der weiteren Abweichungen (29) im Vervollständigungsschritt (10) in einem Glättungsschritt (11) eine Glättung der zu den Punkten P₁, P₂, P₃, ...,Pₙ (37) gespeicherten Beträge der ersten und weiteren Abweichungen (28, 29) derart erfolgt, dass für jeden Punkt P₁, P₂, P₃, ...,Pₙ (37) oder ausgewählte Punkte P₁, P₂, P₃, ...,Pₙ (37) jeweils eine gewichtete Mittelwertbildung erfolgt und dass derart geglättete vollständige Abweichungsdaten (12) erzeugt sind.

9. Verfahren nach einem der Ansprüche 1 bis 8, **dadurch gekennzeichnet, dass** im Deformationsschritt (15) die Deformation der Punkte P₁, P₂, P₃, ..., Pₙ (37) der Daten der Soll-Geometrie (30) der 3D-Struktur für ausgewählte Punkte P₁, P₂, P₃, ...,Pₙ (37) oder für alle Punkte P₁, P₂, P₃, ...,Pₙ (37) durchgeführt wird.

10. Verfahren nach einem der Ansprüche 1 bis 9, **dadurch gekennzeichnet, dass** im Deformationsschritt (15) die Punkte P₁, P₂, P₃, ...,Pₙ (37) der Daten der Soll-Geometrie (30) der 3D-Struktur mit einem Produkt verschoben werden, welches sich aus einem zu einer ersten oder weiteren Abweichung (28, 29) gespeicherter Betrag als erster Faktor und einem zweiten Faktor ergibt, welcher im Bereich zwischen 0,3 und 1,7 liegt.

11. Verfahren nach einem der Ansprüche 1 bis 10, **dadurch gekennzeichnet, dass** eine mittels korrigierter 3D-Druckdaten (38) nachfolgend erzeugte 3D-Struktur dreidimensional vermessen wird, um erneut verfahrensgemäß erste und weitere Abweichungen (28, 29) zwischen der Soll-Geometrie (30) der zu erzeugenden 3D-Struktur und der Ist-Geometrie (31) der nachfolgend erzeugten 3D-Struktur zu ermitteln, wobei nachfolgend in einem Deformationsschritt eine Deformation der bereits korrigierten 3D-Druckdaten (38) mittels der erste und weiteren Abweichungen (28, 29) zumindest teilweise erfolgt, wobei weiter korrigierte 3D-Druckdaten erzeugt werden, mittels derer die Erzeugung einer nachfolgend zu erzeugenden 3D-Struktur in dem 3D-Druckverfahren gesteuert wird.

## Claims

1. Method for producing a 3D structure in a 3D printing process, in which, for a 3D structure (30) to be created from 3D print data, which are data regarding a target geometry (30) of the 3D structure, first layer data (4) for the individual layers of the 3D structure (30) to be created are provided and are used to control the creation of the 3D structure in a 3D printing process,
• wherein a created 3D structure (31) is measured in three dimensions, wherein in practice incomplete three-dimensional data regarding a scanned actual geometry (31) of the 3D structure of a surface of the created 3D structure (31) are generated, these being mapped in a model (34) having one or more unscanned regions (35),
• wherein first deviations (28) between corresponding points P (37) and P' (36) in the scanned regions are determined in a projection step (9), wherein the point P (37) is respectively located on a surface of the target geometry (30) of the 3D structure and the associated point P' (36) is respectively located on the model (34) of the surface of the scanned actual geometry (31) of the 3D structure,
• wherein these ascertained first deviations (28) are stored, with their value, as deviation data in relation to associated points P₁, P₂, P₃, ..., Pₙ (37) of the data regarding the target geometry (30) of the 3D structure,
• wherein the further deviations (29) belonging to the unscanned regions (35) of the surface of the created 3D structure (31) are completed, in a completion step (10), using the data regarding the target geometry (30) of the 3D structure and the already ascertained first deviation data (28), and in that the generated further deviation data (29) in relation to associated points P₁, P₂, P₃, ..., Pₙ (37) of the data regarding the target geometry (30) of the 3D structure are stored with their value, and in that deviation data completed in this way are generated,
• wherein corrected 3D print data (38) are generated in a deformation step (15), in which points P₁, P₂, P₃, ..., Pₙ (37) of the data regarding the target geometry (30) of the 3D structure are displaced by a magnitude, dependent on the first or further deviation (28, 29), of the stored value in a direction opposite the ascertained first or further deviation (28, 29) on the basis of the stored first or further deviation (28, 29) ascertained in relation to the respective point P₁, P₂, P₃, ...,Pₙ (37), and
• wherein these corrected 3D print data (38) are used to control the creation of subsequent 3D structures in a 3D printing process.

2. Method according to Claim 1, **characterized in that** unscanned regions (35) are regions of the surface of the created 3D structure (31) in relation to which no data were able to be generated in the model (34) during the three-dimensional measurement.

3. Method according to either of Claims 1 and 2, **characterized in that** the surface of the target geometry (30) of the 3D structure to be created is reproduced, that is to say triangulated, by way of multiple partial surfaces each having multiple corners in a conversion step (2), wherein points P₁, P₂, P₃, ..., Pₙ (37) are assigned to the corners of the partial surfaces.

4. Method according to one of Claims 1 to 3, **characterized in that**, in the completion step (10), further deviations (29) in relation to points P₁, P₂, P₃, ..., Pₙ (37) are ascertained in a first step by generating a further deviation (29) in relation to a point P₁, P₂, P₃, ...,Pₙ (37) in the unscanned region (35) from multiple ascertained first deviations (28) in relation to points P₁, P₂, P₃, ...,Pₙ (37) at the edges of the unscanned regions (35) by way of a function, and **in that**, in a subsequent step, a further deviation (29) in relation to a point P₁, P₂, P₃, ..., Pₙ (37) in the unscanned region (35) is ascertained from multiple ascertained first deviations (28) or further deviations (29) in relation to points P₁, P₂, P₃, ..., Pₙ (37) by way of the function.

5. Method according to Claim 4, **characterized in that** a function is arithmetic averaging, area-weighted averaging, angle-weighted averaging or distance-weighted averaging.

6. Method according to one of Claims 1 to 5, **characterized in that** the ascertaining of further deviations (29) in relation to points P₁, P₂, P₃, ..., Pₙ (37) in the unscanned region (35) begins at the edge of the unscanned region (35) and is continued in the direction of an assumed centre of the unscanned region (35).

7. Method according to one of Claims 1 to 6, **characterized in that**, in the deformation step (15), points P₁, P₂, P₃, ..., Pₙ (37) are displaced in each case along a corner normal running through the respective point P₁, P₂, P₃, ..., Pₙ (37).

8. Method according to one of Claims 1 to 7, **characterized in that**, after the generation of the further deviations (29) in the completion step (10), in a smoothing step (11), the magnitudes, stored in relation to the points P₁, P₂, P₃, ..., Pₙ (37), of the first and further deviations (28, 29) are smoothed such that in each case weighted averaging is carried out for each point P₁, P₂, P₃, ...,Pₙ (37) or selected points P₁, P₂, P₃, ...,Pₙ (37) and that smoothed complete deviation data (12) are thereby generated.

9. Method according to one of Claims 1 to 8, **characterized in that**, in the deformation step (15), the points P₁, P₂, P₃, ...,Pₙ (37) of the data regarding the target geometry (30) of the 3D structure are deformed for selected points P₁, P₂, P₃, ...,Pₙ (37) or for all points P₁, P₂, P₃, ...,Pₙ (37).

10. Method according to one of Claims 1 to 9, **characterized in that**, in the deformation step (15), the points P₁, P₂, P₃, ...,Pₙ (37) of the data regarding the target geometry (30) of the 3D structure are displaced by a product given by a magnitude, stored in relation to a first or further deviation (28, 29), as a first factor and a second factor in the range of 0.3 to 1.7.

11. Method according to one of Claims 1 to 10, **characterized in that** a 3D structure subsequently created by way of corrected 3D print data (38) is measured in three dimensions in order, in accordance with the method, again to ascertain first and further deviations (28, 29) between the target geometry (30) of the 3D structure to be created and the actual geometry (31) of the subsequently created 3D structure, wherein subsequently, in a deformation step, the already corrected 3D print data (38) are deformed at least partially by way of the first and further deviations (28, 29), wherein further-corrected 3D print data are generated by way of which the creation of a 3D structure to be created subsequently in the 3D printing process is controlled.

## Revendications

1. Procédé de fabrication d'une structure 3D dans un procédé d'impression 3D, dans lequel, pour une structure 3D à générer (30) à partir de données d'impression 3D, qui sont des données d'une géométrie cible (30) de la structure 3D, des premières données de couche (4) avec lesquelles la génération de la structure 3D est commandée dans un procédé d'impression 3D, sont fournies pour les couches individuelles de la structure 3D à générer (30),
• une structure 3D (31) générée est mesurée en trois dimensions, produisant en pratique des données tridimensionnelles incomplètes d'une géométrie réelle numérisée (31) de la structure 3D d'une surface de la structure 3D (31) générée, lesquelles sont représentées dans un modèle (34) et présentent une ou plusieurs zones non numérisées (35),
• lors d'une étape de projection (9), des premiers écarts (28) entre des points P (37) et P' (36) correspondants sont déterminés dans les zones numérisées, le point P (37) se situant sur une surface de la géométrie cible (30) de la structure 3D et le point P' (36) associé se situant respectivement sur le modèle (34) de la surface de la géométrie réelle (31) de la structure 3D,
• ces premiers écarts (28) étant mémorisés avec leur valeur comme données d'écart par rapport aux points associés P₁, P₂, P₃, ..., Pₙ (37) des données de la géométrie cible (30) de la structure 3D,
• lors d'une étape de complétion (10), une complétion des autres écarts (29) associés aux zones non numérisées (35) de la surface de la structure 3D (31) générée est effectuée à l'aide des données de la géométrie cible (30) de la structure 3D ainsi que des premières données d'écart (28) déjà déterminées et en ce que les autres données d'écart (29) par rapport aux points associés P₁, P₂, P₃, ..., Pₙ (37) des données de la géométrie cible (30) de la structure 3D sont mémorisés avec leur valeur et en ce que des données de écart complètes sont ainsi générées,
• des données d'impression 3D corrigées (38) étant générées lors d'une étape de déformation (15), lors de laquelle les points P₁, P₂, P₃, ..., Pₙ (37) des données de la géométrie cible (30) de la structure 3D sont décalées, dans une direction opposée au premier ou autre écart (28, 29), d'une quantité dépendant du premier ou autre écart (28, 29) de la valeur mémorisée, en fonction du premier ou autre écart (28, 29) déterminé et mémorisé par rapport au point P₁, P₂, P₃, ..., Pₙ (37) respectif et
• la génération de structures 3D ultérieures étant commandée par un procédé d'impression 3D au moyen de ces données d'impression 3D corrigées (38).

2. Procédé selon la revendication 1, **caractérisé en ce que** les zones non numérisées (35) sont des zones de surface de la structure 3D (31) générée, pour lesquelles aucune donnée n'a pu être générée dans le modèle (34) lors de la mesure tridimensionnelle.

3. Procédé selon l'une des revendications 1 ou 2, **caractérisé en ce que**, lors d'une étape de transformation (2), la surface de la géométrie cible (30) de la structure 3D à générer est reproduite au moyen de plusieurs sous-surfaces présentant chacune plusieurs angles, c'est-à-dire triangulée, les angles des sous-surfaces étant associées aux points P₁, P₂, P₃, ..., Pₙ (37).

4. Procédé selon l'une des revendications 1 à 3, **caractérisé en ce que**, lors de l'étape de complétion (10), d'autres écarts (29) par rapport aux points P₁, P₂, P₃, ..., Pₙ (37) sont déterminés lors d'une première étape, en générant un autre écart (29) par rapport à un point P₁, P₂, P₃, ..., Pₙ (37) dans la zone non numérisée (35) au moyen d'une fonction de plusieurs premiers écarts (28) par rapport aux points P₁, P₂, P₃ ,..., Pₙ (37) sur les bords des zones non numérisées (35) et **en ce que**, lors d'une étape suivante, une détermination d'un autre écart (29) par rapport à un point P₁, P₂, P₃, ..., Pₙ (37) est effectuée dans la zone non numérisée (35) au moyen de la fonction de plusieurs premiers écarts (28) ou d'autres écarts (29) par rapport aux points P₁, P₂, P₃, ..., Pₙ (37).

5. Procédé selon la revendication 4, **caractérisé en ce qu'**une fonction est une moyenne arithmétique, une moyenne pondérée par la surface, une moyenne pondérée par l'angle ou une moyenne pondérée par la distance.

6. Procédé selon l'une des revendications 1 à 5, **caractérisé en ce que** la détermination d'autres écarts (29) par rapport aux points P₁, P₂, P₃ ,..., Pₙ (37) commence dans la zone non numérisée (35) sur le bord de la zone non numérisée (35) et se poursuit vers un centre supposé de la zone non numérisée (35).

7. Procédé selon l'une des revendications 1 à 6, **caractérisé en ce que**, lors de l'étape de déformation (15), un décalage des points P₁, P₂, P₃, ..., Pₙ (37) est respectivement effectué le long d'une normale à l'angle passant par le point P₁, P₂, P₃, ..., Pₙ (37) respectif.

8. Procédé selon l'une des revendications 1 à 7, **caractérisé en ce que**, après que les autres écarts (29) ont été générés lors de l'étape de complétion (10), un lissage des valeurs mémorisées aux points P₁, P₂, P₃, ..., Pₙ (37) des premiers et des autres écarts (28, 29) est effectués lors d'une étape de lissage (11), de telle sorte que, pour chaque point P₁, P₂, P₃, ..., Pₙ (37) ou pour des points P₁, P₂, P₃, ..., Pₙ (37) sélectionnés, une moyenne pondérée est établie et des données d'écarts complètes (12) ainsi lissées sont générées.

9. Procédé selon l'une des revendications 1 à 8, **caractérisé en ce que**, lors de l'étape de déformation (15), la déformation des points P₁, P₂, P₃, ..., Pₙ (37) des données de la géométrie cible (30) de la structure 3D est effectuée pour des points P₁, P₂, P₃, ..., Pₙ (37) sélectionnés ou pour tous les points P₁, P₂, P₃, ..., Pₙ (37).

10. Procédé selon l'une des revendications 1 à 9, **caractérisé en ce que**, lors de l'étape de déformation (15), les points P₁, P₂, P₃, ..., Pₙₙ (37) des données de la géométrie cible (30) de la structure 3D sont décalés d'un produit qui résulte d'une valeur mémorisée pour un premier ou pour un autre écart (28, 29) en tant que premier facteur et que second facteur, qui se situe dans la plage comprise entre 0,3 et 1,7.

11. Procédé selon l'une des revendications 1 à 10, **caractérisé en ce qu'**une structure 3D générée ultérieurement au moyen de données d'impression 3D (38) corrigées est mesurée afin de déterminer à nouveau, conformément au procédé, des premiers et autres écarts (28, 29) entre la géométrie cible (30) de la structure 3D à générer et la géométrie réelle (31) de la structure 3D suivante, une déformation des données d'impression 3D (38) déjà corrigées étant ensuite effectuée au moins en partie lors d'une étape de déformation au moyen des premières et autres écarts (28, 29), d'autres données d'impression 3D corrigées étant générées, au moyen desquelles la génération d'une structure 3D à générer ultérieurement est commandée dans le procédé d'impression 3D.
